(19) Europäisches Patentamt
European Patent Office
Office européen des brevets

(11) EP 1 832 596 B1

(12) EUROPÄISCHE PATENTSCHRIFT

(45) Veröffentlichungstag und Bekanntmachung des Hinweises auf die Patenterteilung:
**26.01.2011 Patentblatt 2011/04**

(51) Int Cl.:
*C07F 9/38* (2006.01) *C08K 5/5313* (2006.01)
*C08K 5/00* (2006.01)

(21) Anmeldenummer: **07004223.9**

(22) Anmeldetag: **01.03.2007**

(54) **Mischungen aus Mono-Carboxyl funktionalisierten Dialkylphosphinsäureestern und weiteren Komponenten**

Compounds of mono-carboxyl functionalised dialkylphosphine acids and other components

Mélanges en acides dialkyl phosphiniques fonctionnalisés par monocarboxyle et composants complémentaires

(84) Benannte Vertragsstaaten:
**AT BE CH DE ES FR GB IT LI NL**

(30) Priorität: **07.03.2006 DE 102006010361**

(43) Veröffentlichungstag der Anmeldung:
**12.09.2007 Patentblatt 2007/37**

(73) Patentinhaber: **Clariant Finance (BVI) Limited Road Town, Tortola (VG)**

(72) Erfinder:
- **Maas, Wiebke 50354 Hürth (DE)**
- **Krause, Werner 50354 Hürth (DE)**
- **Bauer, Harald 50170 Kerpen (DE)**

(74) Vertreter: **Jacobi, Carola et al
Clariant Produkte (Deutschland) GmbH
Group Intellectual Property
Am Unisys-Park 1
65843 Sulzbach (DE)**

(56) Entgegenhaltungen:
**JP-A- 7 102 418**

- **KHAIRULLIN, V. K. ET AL: "Reaction of ethyl- and tolyldichlorophosphine with .alpha.,.beta.-unsaturated acids" ZHURNAL OBSHCHEI KHIMII , 37(8), 1838-43 CODEN: ZOKHA4; ISSN: 0044-460X, 1967, XP009084871**
- **KHAIRULLIN, V. K. ET AL: "Reaction of ethylphosphonous dichloride with crotonic acid" ZHURNAL OBSHCHEI KHIMII , 36(3), 494-8 CODEN: ZOKHA4; ISSN: 0044-460X, 1966, XP009084872**
- **PUDOVIK, A. N. ET AL: "New method of synthesis of esters of phosphonic and thiophosphonic acids. XVI. Synthesis of esters of mono- and diphosphono- and thiophosphonocarboxylic acids" BULLETIN OF THE ACADEMY OF SCIENCES OF THE USSR, DIVISION OF CHEMICAL SCIENCE (ENGLISH TRANSLATION) 543-50 CODEN: BACCAT; ISSN: 0568-5230, 1954, XP009084884**
- **PUDOVIK, A. N. ET AL: "New method of synthesis of esters of phosphonic and thiophosphonic acids. XVI. Synthesis of esters of mono- and diphosphono- and thiophosphonocarboxylic acids" IZVESTIYA AKADEMII NAUK SSSR, SERIYA KHIMICHESKAYA 636-45 CODEN: IASKA6; ISSN: 0002-3353, 1954, XP009084868**
- **PUDOVIK, A. N. ET AL: "Reaction of 2-ethyl-2,5-dioxo-1,2-oxaphospholane with alcohols" ZHURNAL OBSHCHEI KHIMII , 52(4), 786-9 CODEN: ZOKHA4; ISSN: 0044-460X, 1982, XP009084875**
- **PUDOVIK, A. N. ET AL: "Reaction of phosphorus (III) acid chlorides with carboxylic acids" KHIM. ELEMENTOORG. SOEDIN. , 156-60. EDITOR(S): DANILOV, S. N. PUBLISHER: "NAUKA", LENINGR. OTD., LENINGRAD, USSR. CODEN: 33YRAV, 1976, XP009084876**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 832 596 B1

- KHAIRULLIN, V. K. ET AL: "Reaction of ethyldichlorophosphine with acrylic acid esters" IZVESTIYA AKADEMII NAUK SSSR, SERIYA KHIMICHESKAYA , (4), 871-6 CODEN: IASKA6; ISSN: 0002-3353, 1970, XP009084869
- KHAIRULLIN, V. K. ET AL: "Synthesis and some properties of ethyl[.beta.- (ethoxycarbonyl)ethyl] phosphinyl chloride" ZHURNAL OBSHCHEI KHIMII , 39(2), 341-6 CODEN: ZOKHA4; ISSN: 0044-460X, 1969, XP009084870
- BERTENSHAW S R ET AL: "PHOSPHORUS-CONTAINING INHIBITORS OF ENDOTHELIN CONVERTING ENZYME: EFFECTS OF THE ELECTRONIC NATURE OF PHOSPHORUS ON INHIBITOR POTENCY" JOURNAL OF MEDICINAL CHEMISTRY, AMERICAN CHEMICAL SOCIETY. WASHINGTON, US, Bd. 36, Nr. 1, 1993, Seiten 173-176, XP001180518 ISSN: 0022-2623
- GROBELNY D ET AL: "BINDING ENERGETICS OF PHOSPHORUS-CONTAINING INHIBITORS OF THERMOLYSIN" BIOCHEMISTRY, AMERICAN CHEMICAL SOCIETY. EASTON, PA, US, Bd. 28, Nr. 12, 1. Juni 1989 (1989-06-01), Seiten 4948-4951, XP000009206 ISSN: 0006-2960
- TSIVUNIN, V. S. ET AL: "Reaction of some phosphorus acids with .alpha.,.beta.-unsaturated acid halides" ZHURNAL OBSHCHEI KHIMII , 40(9), 1995-2001 CODEN: ZOKHA4; ISSN: 0044-460X, 1970, XP009084873
- PUDOVIK, A. N. ET AL: "New synthesis of esters of phosphonic and thiophosphonic acids. XV. Addition of esters of phenyl- and alkylphosphonous acids to esters of methacrylic and acrylic acids" IZVESTIYA AKADEMII NAUK SSSR, SERIYA KHIMICHESKAYA 902-7 CODEN: IASKA6; ISSN: 0002-3353, 1952, XP009084883

## Beschreibung

Die Erfindung betrifft Mischungen aus Mono-Carboxylfunktionalisierten Dialkylphosphinsäureestern und weiteren Komponenten, ein Verfahren zu deren Herstellung und ihre Verwendung.

Mono-Carboxylfunktionalisierte Dialkylphosphinsäureester und deren Derivate sind bekannt. Sie können nach verschiedenen Verfahren hergestellt werden.

Mehrfach beschrieben sind Verfahren bei dem der Mono-Carboxylfunktionalisierte Dialkylphosphinsäureester über mehrere Schritte ausgehend von Phosphonigsäuredihalogeniden hergestellt wird. Hierzu gehört die Umsetzung von Dihalogenphosphinen mit aktivierten olefinischen Verbindungen wie z.B. Acrylsäure, gefolgt von der Veresterung der zunächst gebildeten Säurechlorid- und Anhydrid-Derivate mit Alkoholen (V.K. Khairullin, R. R. Shagidullin, Zh. Obshch. Khim. 36, 289-296).

Mono-Carboxylfunktionalisierte Dialkylphosphinsäureester werden auch erhalten, wenn man Phosphonigsäuremonoester in Gegenwart peroxidischer Katalysatoren an $\alpha,\beta$-ungesättigte Carbonsäureester addiert (Houben-Weyl, Band 12/1, S. 258-259). Die Phosphonigsäuremonoester selbst werden wiederum aus Phosphonigsäuredihalogeniden durch Umsetzung mit Alkoholen oder durch Hydrolyse und anschließender Veresterung hergestellt.

Die vorgenannten Phosphonigsäuredihalogenide selbst werden bisher in einer aufwendigen Synthese aus Phosphortrichlorid und Alkylchlorid in Gegenwart von Aluminiumchlorid hergestellt (Houben-Weyl, Band 12/1, S. 306). Die Reaktion ist stark exotherm und technisch nur schwierig zu beherrschen. Es werden zudem verschiedene Nebenprodukte gebildet, die, wie zum Teil auch die vorgenannten Ausgangsprodukte, giftig und/oder korrosiv, also höchst unerwünscht, sind.
Ein weiteres bekanntes Verfahren zur Herstellung von Mono-Carboxylfunktionalisierten Dialkylphosphinsäureestern basiert auf der Umsetzung von gelbem Phosphor mit Methylchlorid, wobei Methylphosphonigsäure entsteht, die in dann verestert und daraufhin mit Acrylsäureester umgesetzt wird (DE-A-101 53 780).

Mono-Carboxylfunktionalisierte Dialkylphosphinsäureester können auch durch Umsetzung von Phosphonigsäure-Bis(trimethylsilyl)ester - $HP(OSiMe_3)_2$ - mit $\alpha,\beta$-ungesättigten Carbonsäure-Komponenten, anschließender Alkylierung mit Alkylhalogeniden nach der Arbuzov-Reaktion und Alkoholyse erhalten werden (Kurdyumova, N. R.; Rozhko, L. F.; Ragulin, V. V.; Tsvetkov, E. N.; Russian Journal of General Chemistry (Translation of Zhurnal Obshchei Khimii (1997), 67(12), 1852-1856). Der Phosphonigsäure-Bis(trimethylsilyl)ester wird dabei aus Kalium- oder Ammoniumhypophosphit durch Umsetzung mit Hexamethyldisilazan erhalten.

In oben genanntem Verfahren werden in großen Mengen halogenhaltiger Chemikalien eingesetzt. Entsprechend enthalten die so resultierenden Mono-Carboxylfunktionalisierten Dialkylphosphinsäureester halogenhaltige Nebenprodukte.

Nachteilig an diesem Stand der Technik ist die synthesebedingte Bildung dieser halogenhaltigen Nebenprodukte, weil halogenhaltige Verbindungen, insbesondere chlorhaltige Verbindungen, bekanntlich korrosiver als halogenfreie Verbindungen sind. Bezüglich der Anwendung als Flammschutzmittel besitzen halogenhaltige Verbindungen dazu den Nachteil, dass sich im Brandfall korrosive und giftige Gase bilden können die den Einsatz solcher Verbindungen als Flammschutzmittel zumindestens fraglich erscheinen lassen, wenn nicht sogar ein Einsatz überhaupt nicht möglich ist. Die nachträgliche Entfernung der halogenhaltigen Verbindungen aus den Produkten der genannten Verfahren kostet zusätzliche Energie und Zeit, wodurch wirtschaftliche und umwelttechnische Nachteile entstehen.

Zu den am häufigsten eingesetzten Phosphonsäure-Dihalogeniden gehört das Methyldichlorphosphin, welches selbst bisher in einer sehr aufwendigen Synthese aus Phosphortrichlorid und Methylchlorid in Gegenwart von Aluminiumchlorid hergestellt wird (Houben-Weyl, Band 12/1, S. 306). Die Reaktion ist stark exotherm und technisch nur schwierig zu beherrschen. Es werden zudem verschiedene, v.a.D. halogenhaltige Nebenprodukte gebildet, die, wie zum Teil auch die vorgenannten Ausgangsprodukte selbst, giftig und/oder korrosiv, also höchst unerwünscht, sind. Angesichts des Korrosionseffekts und der Unverträglichkeit mit der Umwelt ist der Einsatz solcher Edukte und der daraus erhaltenen Nebenprodukte möglichst zu vermeiden.

Es besteht daher ein Bedarf an Mono-Carboxylfunktionalisierten Dialkylphosphinsäureestern, die halogenarm bzw. sogar halogenfrei sind.

Es besteht auch ein Bedarf an einem Verfahren zur Herstellung Mono-Carboxylfunktionalisierte Dialkylphosphinsäureester, welches halogenarm bzw. sogar halogenfrei, auf einfache und wirtschaftliche Art und Weise durchführbar ist und bei dem einheitliche Produkte in hoher Ausbeute und Reinheit erhalten werden. Auch sollte ein solches Verfahren den bisher bekannten umwelttechnisch deutlich überlegen sein.

Eine weitere Aufgabe der Erfindung ist es daher, ein Verfahren zur Herstellung von Mono-Carboxylfunktionalisierten Dialkylphosphinsäureestern zur Verfügung zu stellen, das die vorgenannten Nachteile des Standes der Technik vermeidet und von Hypophosphoriger Säure oder deren Salzen ausgeht.

Es ist jedoch zunächst Aufgabe der vorliegenden Erfindung, extrem halogenarme bzw. halogenfreie Mono-Carboxylfunktionalisierte Dialkylphosphinsäureester zur Verfügung zu stellen.

Unter halogenhaltigen Verbindungen werden erfindungsgemäß solche chemischen Verbindungen verstanden,

in denen Atome der 7. Hauptgruppe, insbesondere Fluor, Chlor, Brom und Iod, chemisch an Kohlenstoff oder Phosphor gebunden vorliegen. Außerdem werden erfindungsgemäß unter halogenhaltigen Verbindungen auch solche Salze, die Halogenid-Anionen enthalten verstanden.

Diese Aufgabe wird gelöst durch Mischungen aus Mono-Carboxylfunktionalisierten Dialkylphosphinsäureestern und weiteren Komponenten, dadurch gekennzeichnet, dass sie

A) 98 bis 100 Gew.-% 3-(Ethylhydroxyphosphinyl)-Propionsäuremethylester, 3-(Ethylhydroxyphosphinyl)-Propionsäure-(2-hydroxyethyl)-ester, 3-(Ethylhydroxyphosphinyl)-Propionsäure-(2,3-dihydroxypropyl)-ester, 3-(Ethylhydroxyphosphinyl)-2-methyl-Propionsäureallylester, 3-(Ethylhydroxyphosphinyl)-2-methyl-Propionsäure-(4-hydroxybutyl)-ester, 3-(Ethylhydroxyphosphinyl)-Propionsäure-(6-hydroxyhexyl)-ester, 3-(Ethyl-n-butoxy-phosphinyl)-Isobuttersäure-2-hydroxyethylester, 3-(Ethyl-n-butoxy-phosphinyl)-Propionsäure-butyl-ester, 3-(Ethyl-methoxy-phosphinyl)-Propionsäure-methyl-ester, 3-(Propylhydroxyphosphinyl)-Propionsäurebutylester, 3-(Propylhydroxyphosphinyl)-Propionsäure-(2-hydroxyethyl)-ester, 3-(Propylhydroxyphosphinyl)-Propionsäure-(2-hydroxypropyl)-ester, 3-(Propylhydroxyphosphinyl)-2-methyl-Propionsäure-(2-hydroxypropyl)-ester, 3-(Propylhydroxyphosphinyl)-Propionsäuremethylester, 3-(Butylhydroxyphosphinyl)-Propionsäure-(2-hydroxyethyl)-ester, 3-(Hexylhydroxyphosphinyl)-Propionsäure-(3-hydroxypropyl)-ester, 3-(Ethylhydroxyphosphinyl)-2-methyl-Buttersäure-(2-hydroxyethyl)-ester, 3-(Propylhydroxyphosphinyl)-2-methyl-Buttersäure-(2-hydroxyethyl)-ester, 3-(Ethylhydroxyphosphinyl)-2-methyl-Buttersäure-(2-hydroxypropyl)-ester, 3-(Propylhydroxyphosphinyl)-2-methyl-Buttersäure-(2-hydroxypropyl)-ester, 3-(Propylhydroxyphosphinyl)-Propionsäure-(2,3-dihydroxypropyl)-ester und/oder 3-(Ethylmethoxy-phosphinyl)-2-methyl-Buttersäure-methyl-ester und

B) 0 bis 2 Gew.-% Halogene enthalten,

wobei die Summe der Komponenten immer 100 Gew.-% beträgt.

Bevorzugt enthalten die Mischungen 99,9995 bis 100 Gew.-% Verbindungen wie unter A) aufgeführt und 0 bis 0,0005 Gew.-% Halogene.

Die Erfindung betrifft auch ein Verfahren zur Herstellung aus Mono-Carboxylfunktionalisierten Dialkylphosphinsäureestern und weiteren Komponenten, dadurch gekennzeichnet, dass sie 0 bis 2 Gew.% Halogene enthalten, wobei die Summe der Komponenten immer 100 Gew.-% beträgt, und dadurch gekennzeichnet, dass man hypophosphorige Säure oder deren Salze (Komponente C) der Formel **II**

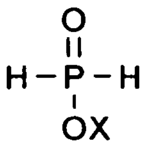

**II**

in der X H, Na, K oder $NH_4$ bedeutet, in Gegenwart eines radikalischen Initiators mit einem $\alpha,\beta$-ungesättigten Carbonsäure-Derivat (Komponente D) der Formel III,

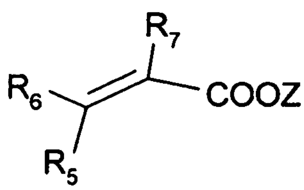

**III**

in der Z $C_{1-18}$-Alkyl oder $C_{6-18}$-Aryl bedeutet oder für Y steht oder einer $\alpha,\beta$-ungesättigten Carbonsäure (Komponente D') der Formel IV

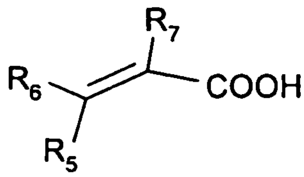

IV

und mit einem Olefin (Komponente E) der Formel V

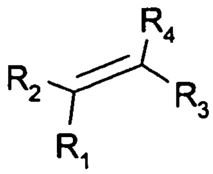

V

umsetzt, wobei in den Formeln III, IV und V $R_1$, $R_2$, $R_3$, $R_4$, $R_5$, $R_6$ und $R_7$ gleich oder verschieden sind und unabhängig voneinander H, Methyl, Ethyl, n-Propyl, Isopropyl, n-Butyl, Isobutyl, tert. Butyl und/oder Phenyl,
Y Methyl, Ethyl, n-Propyl, Isopropyl, n-Butyl, Isobutyl, tert. Butyl, Phenyl, 2-Hydroxyethyl, 2,3-Dihydroxypropyl, 2-Hydroxypropyl, 3-Hydroxypropyl, 4-Hydroxybutyl, 3-Hydroxybutyl, 2-Hydroxybutyl und/oder 6-Hydroxyhexyl, Allyl und/oder Glycerin,
X H, Li, Na, K oder $NH_4$ bedeutet,
oder X die gleiche Bedeutung wie Y hat, wobei dann X und Y für zwei gleiche oder für zwei verschiedene der obigen organischen Reste stehen und bei Einsatz von Formel IV ein Veresterungsschritt mit Y-OH folgt.

Bevorzugt wird hierbei in einem Schritt 1 die Komponente C in Gegenwart eines radikalischen Initiators mit Komponente E zu einer Alkylphosphonigen Säure umgesetzt und in Schritt 2 die resultierende Reaktionslösung mit einem Alkohol M-OH verestert und dabei entstehende Phosphonigsäureester destillativ abgetrennt und dann in einem Schritt 3 in Gegenwart eines radikalischen oder eines basischen Initiators mit Komponente D zum Mono-Carboxylfunktionalisierten Dialkylphosphinsäureester umgesetzt.

Bevorzugt wird hierbei in einem Schritt 1 die Komponente C in Gegenwart eines radikalischen Initiators mit Komponente E zu einer alkylphosphonigen Säure umgesetzt und in Schritt 2 die resultierende Reaktionslösung mit einem Alkohol M-OH verestert und dabei entstehende Phosphonigsäureester destillativ abgetrennt und dann in einem Schritt 3 in Gegenwart eines radikalischen oder eines basischen Initiators mit Komponente D' zum Mono-Carboxylfunktionalisierten Dialkylphosphinsäureester mit X = Alkyl, Y = H umgesetzt und anschließend in einem Schritt 4 dieser Dialkylphos-phinsäureester mit einem Alkohol Y-OH an der Carboxyfunktion verestert, wobei ein Mono-Carboxylfunktionalisierter Dialkylphosphinsäureester erhalten wird.

Bevorzugt wird bei diesem Verfahren im Schritt 2 die alkylphosphonige Säure mit einem linearen oder verzweigten Alkohol der allgemeinen Formel M-OH, wobei M für einen linearen oder verzweigten Alkylrest mit 1 bis 10 Kohlenstoffatomen steht, direkt verestert.

Bevorzugt handelt es sich bei dem Alkohol M-OH um n-Butanol, Iso-Butanol oder Ethylhexanol.

Bevorzugt handelt es sich bei der Komponente C um das Ammonium- oder Natriumsalz der hypophosphorigen Säure.

Bevorzugt handelt es sich bei dem Initiator um einen radikalischen, anionischen, kationischen oder photochemischen Initiator.

Bevorzugt handelt es sich bei dem Initiator um Peroxide bildende Verbindungen und/oder Peroxoverbindungen wie Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azoverbindungen wie Azodüsobutyronitril, 2,2'-Azobis(2-amidinopropan)-dihydrochlorid und/oder 2,2'-Azobis(N,N'-dimethylen-isobutyramidin)-dihydrochlorid.

Bevorzugt handelt es sich bei den $\alpha,\beta$-ungesättigten Carbonsäuren um Acrylsäure, Acrylsäuremethylester, Acrylsäureethylester, Methacrylsäure, Acrylsäurehydroxyethylester, Crotonsäure, Crotonsäureethylester, Tiglinsäure (trans 2,3-Dimethylacryl-säure) und/oder (trans-)2-Pentensäure.

Bevorzugt handelt es sich bei dem Olefin (Komponente E) um Ethylen, Propylen, n-Buten und/oder i-Buten oder beliebige Gemische davon, 1-Hexen, 1-Hepten und/oder 1-Octen; Allylalkohol, Allylamin, Allyl-benzol, Allylanisol, Styrol, $\alpha$-Methylstyrol, 4-Methylstyrol und/oder Vinylacetat.

Bevorzugt erfolgt die Umsetzung der Komponente C mit den Komponenten D und/oder E bei einer Temperatur

von 50 bis 150°C.

Ein weiteres Verfahren zur Herstellung von Mischungen nach **Anspruch 1 oder 2** ist dadurch gekennzeichnet, dass man die Komponente C in einem Schritt 1 mit einem Keton zu 1-Hydroxy-1-dialkylphosphinat umsetzt, in einem Schritt 2 dieses 1-Hydroxy-1-dialkylphosphinat in Gegenwart eines radikalischen Initiators mit Komponente D umsetzt, dann in einem Schritt 3 das Keton abtrennt und in einem Schritt 4 das resultierende Reaktionsgemisch in Gegenwart eines radikalischen Initiators mit der Komponente E umsetzt.

Ein alternatives Verfahren zur Herstellung von Mischungen nach **Anspruch 1 oder 2** ist dadurch gekennzeichnet, dass man die Komponente C in einem Schritt 1 mit einem Keton zu 1-Hydroxy-1-dialkylphosphinat umsetzt, in einem Schritt 2 dieses 1-Hydroxy-1-dialkylphosphinat in Gegenwart eines radikalischen Initiators mit Komponente D' umsetzt, dann in einem Schritt 3 das Keton abtrennt und in einem Schritt 4 das resultierende Reaktionsgemisch in Gegenwart eines radikalischen Initiators mit der Komponente E umsetzt, und anschließend die hiernach erhaltene Mono-Carboxylfunktionalisierte Dialkylphosphinsäure (mit Y=H) mit einem Alkohol YOH zum Mono-Carboxylfunktionalisierten Dialkylphosphinsäureester A umsetzt.

Ein anderes Verfahren zur Herstellung von Mischungen nach **Anspruch 1 oder 2** ist dadurch gekennzeichnet, dass man die Komponente C in einem Schritt 1 mit Aceton zu 1-Hydroxy-1-methylethylphosphinat umsetzt, in einem Schritt 2 dieses 1-Hydroxy-1-methylethylphosphinat in Gegenwart eines radikalischen Initiators mit Komponente E umsetzt, dann in einem Schritt 3 das Aceton abtrennt und in einem Schritt 4 das resultierende Reaktionsgemisch in Gegenwart eines radikalischen Initiators mit der Komponente D oder D' umsetzt.

Bevorzugt setzt man nach der Umsetzung mit der Komponente D' die hiernach erhaltene Mono-Carboxylfunktionalisierte Dialkylphosphinsäure (mit Y=H) mit einem Alkohol YOH zum Mono-Carboxylfunktionalisierten Dialkylphosphinsäureester um.

Die Erfindung betrifft auch die Verwendung von Mischungen **Anspruch 1 oder 2** als Flammschutzmittel oder zur Herstellung von Flammschutzmitteln, flammgeschützten Formmassen und/oder flammgeschützten Polymer-Formkörpern, -Filmen, -Fäden und -Fasern.

Diese Verwendung ist dadurch gekennzeichnet, dass die flammgeschützte Formmasse bzw. die Polymer-Formkörper, -Filme, -Fäden und -Fasern 1 bis 50 Gew.-% der Mischungen nach einem oder mehreren der Ansprüche 1 bis 3, 1 bis 99 Gew.-% Polymer oder Mischungen derselben, 0 bis 60 Gew.-% Additive und 0 bis 60 Gew.-% Füllstoff enthält, wobei die Summe der Komponenten immer 100 Gew.-% beträgt.

Grundsätzlich geeignet sind auch solche Mischungen, die

A) 98 bis 100 Gew.-% Mono-Carboxylfunktionalisierte Dialkylphosphinsäureester der Formel (I)

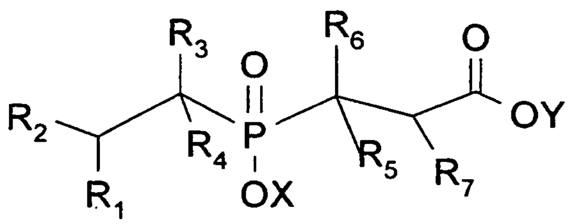

(I)

in der $R_1$, $R_2$, $R_3$, $R_4$, $R_5$, $R_6$, $R_7$ gleich oder verschieden sind und unabhängig voneinander H, $C_1$-$C_{18}$-Alkyl, $C_6$-$C_{18}$-Aryl, $C_6$-$C_{18}$-Aralkyl, $C_6$-$C_{18}$-Alkyl-Aryl, CN, CHO, $OC(O)CH_2CN$, $CH(OH)C_2H_5$, $CH_2CH(OH)CH_3$, 9-Anthracen, 2-Pyrrolidon, $(CH_2)_mOH$, $(CH_2)_mNH_2$, $(CH_2)_mNCS$, $(CH_2)_mNC(S)NH_2$, $(CH_2)_mSH$, $(CH_2)_mS$-2-thiazolin, $(CH_2)_mSiMe_3$, $C(O)R_8$, $(CH_2)_mC(O)R_8$, $CH=CH-R_8$, $CH=CH-C(O)R_8$ bedeuten, wobei $R_8$ für $C_1$-$C_{18}$-Alkyl oder $C_6$-$C_{18}$-Aryl steht und Y $C_1$-$C_{18}$-Alkyl, $C_6$-$C_{18}$-Aryl, $C_6$-$C_{18}$-Aralkyl, $C_6$-$C_{18}$-Alkyl-Aryl, $(CH_2)_kOH$, $CH_2$-CHOH-$CH_2OH$, $(CH_2)_kO(CH_2)_kH$, $(CH_2)_k$-CH(OH)-$(CH_2)_kH$, $(CH_2-CH_2O)_kH$, $(CH_2-C[CH_3]HO)_kH$, $(CH_2-C[CH_3]HO)_k(CH_2-CH_2O)_kH$, $(CH_2-CH_2O)_k(CH_2-C[CH_3]HO)H$, $(CH_2-CH_2O)_k$-alkyl, $(CH_2-C[CH_3]HO)_k$-alkyl, $(CH_2-C[CH_3]HO)_k(CH_2-CH_2O)_k$-alkyl, $(CH_2-CH_2O)_k(CH_2-C[CH_3]HO)O$-alkyl, $(CH_2)_k-CH=CH(CH_2)_kH$, $(CH_2)_kNH_2$, $(CH_2)_kN[(CH_2)_kH]_2$ bedeutet wobei k eine ganze Zahl von 0 bis 100, bevorzugt 2 bis 10 ist und X H, Li, Na, K oder $NH_4$ ist oder X die gleiche Bedeutung wie Y hat, wobei dann X und Y gleich sind oder für zwei verschiedene der obigen organischen Reste stehen und

m eine ganze Zahl von 0 bis 10, bevorzugt 1 bis 10, bedeutet und

B) 0 bis 2 Gew.-% Halogene enthalten,

wobei die Summe der Komponenten immer 100 Gew.-% beträgt.

Bevorzugt enthalten diese Mischungen 99 bis 100 Gew.-%, insbesondere 99,99 bis 100 Gew.-% Mono-Carboxylfunktionalisierte Dialkylphosphinsäureester der Formel (I) und 0 bis 1 Gew.-%, insbesondere 0 bis 0,01 Gew.-%

Halogene.

Die Gruppen $C_6$-$C_8$-Aryl, $C_6$-$C_{18}$-Aralkyl und $C_6$-$C_{18}$-Alkyl-Aryl können mit $SO_3X_2$, -C(O)CH3, OH, $CH_2OH$, $CH_3SO_3X_2$, $PO_3X_2$, $NH_2$, $NO_2$, $OCH_3$, SH und/oder $OC(O)CH_3$ substituiert sein.

$R_1$, $R_2$, $R_3$, $R_4$, $R_5$, $R_6$, $R_7$ können gleich oder verschieden sein und unabhängig voneinander H, Methyl, Ethyl, n-Propyl, Isopropyl, n-Butyl, Isobutyl, tert. Butyl und/oder Phenyl, insbesondere H und/oder Methyl bedeuten.
X und Y können oder verschieden sein und jeweils Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin bedeuten. Für X ist H bevorzugt.

Bevorzugt enthalten die Mischungen A) 99,9995 bis 100 Gew.-% an 3-(Ethylhydroxy-phosphinyl)-Propionsäuremethylester, 3-(Ethylhydroxyphosphinyl)-Propionsäure-(2-hydroxyethyl)-ester, 3-(Ethylhydroxyphosphinyl)-Propionsäure-(2,3-dihydroxypropyl)-ester, 3-(Ethylhydroxyphosphinyl)-2-methyl-Propionsäureallylester, 3-(Ethylhydroxyphosphinyl)-2-methyl-Propionsäure-(4-hydroxybutyl)-ester, 3-(Ethylhydroxyphosphinyl)-Propionsäure-(6-hydroxyhexyl)-ester, 3-(Ethyl-n-butoxy-phosphinyl)-Isobuttersäure-2-hydroxyethylester, 3-(Ethyl-n-butoxy-phosphinyl)-Propionsäure-butyl-ester, 3-(Ethyl-methoxy-phosphinyl)-Propionsäure-methyl-ester, 3-(Propylhydroxyphosphinyl)-Propionsäurebutylester, 3-(Propylhydroxyphosphinyl)-Propionsäure-(2-hydroxyethyl)-ester, 3-(Propylhydroxyphosphinyl)-Propionsäure-(2-hydroxypropyl)-ester, 3-(Propylhydroxyphosphinyl)-2-methyl-Propionsäure-(2-hydroxypropyl)-ester, 3-(Propylhydroxyphosphinyl)-Propionsäuremethylester, 3-(Butylhydroxyphosphinyl)-Propionsäure-(2-hydroxyethyl)-ester, 3-(Hexylhydroxyphosphinyl)-Propionsäure-(3-hydroxypropyl)-ester, 3-(Ethylhydroxyphosphinyl)-2-methyl-Buttersäure-(2-hydroxy-ethyl)-ester, 3-(Propylhydroxyphosphinyl)-2-methyl-Buttersäure-(2-hydroxyethyl)-ester, 3-(Ethylhydroxyphosphinyl)-2-methyl-Buttersäure-(2-hydroxypropyl)-ester, 3-(Propyl-hydroxyphosphinyl)-2-methyl-Buttersäure-(2-hydroxypropyl)-ester, 3-(Propylhydroxy-phosphinyl)-Propionsäure-(2,3-dihydroxypropyl)-ester und/oder 3-(Ethyl-methoxy-phosphinyl)- 2-methyl-Buttersäure-methyl-ester und B) 0 bis 0,0005 Gew.-% an Chlor.

Die Erfindung betrifft auch ein Verfahren zur Herstellung der vorgenannten Mischungen, dadurch gekennzeichnet, dass man hypophosphorige Säure oder deren Salze (Komponente C) in Gegenwart eines radikalischen Initiators mit einem $\alpha,\beta$-ungesättigten Carbonsäurederivat (Komponente D) oder einer $\alpha,\beta$-ungesättigten Carbonsäure (Komponente D') und mit einem Olefin (Komponente E) umsetzt.

Bevorzugt ist, wenn Z $C_{6-18}$-Aryl bedeutet, diese Gruppe mit $SO_3X_2$, $-C(O)CH_3$, OH, $CH_2OH$, $CH_3SO_3X_2$, $PO_3X_2$, $NH_2$, $NO_2$, $OCH_3$, SH und/oder $OC(O)CH_3$ substituiert.

Bevorzugt bedeutet Y etwa Methyl, Ethyl, n-Propyl, Isopropyl, Allyl, n-Butyl, 2-Butyl, tert.-Butyl, Isobutyl, tert.-Butyl, n-Hexyl und/oder Phenyl; 2-Hydroxyethyl, 2,3-Dihydroxypropyl, 2-Hydroxypropyl, 3-Hydroxypropyl, 4-Hydroxybutyl, 3-Hydroxybutyl, 2-Hydroxybutyl und/oder 6-Hydroxyhexyl; 2-Methoxyethyl, 2-Ethoxyethyl, 2-Butoxyethyl, 2-Dodecyloxyethyl, Methyldiglykol, Ethyldiglykol und/oder Polyglykol.

Bevorzugt wird in einem ersten Verfahrensschritt die Komponente C in Gegenwart eines radikalischen Initiators mit Komponente D oder D' umgesetzt und in einem zweiten Verfahrensschritt die resultierende Reaktionslösung ebenfalls in Gegenwart eines radikalischen Initiators mit Komponente E umgesetzt.

Bevorzugt wird in einem ersten Verfahrensschritt die Komponente C in Gegenwart eines radikalischen Initiators mit Komponente E umgesetzt und in einem zweiten Verfahrensschritt die resultierende Reaktionslösung ebenfalls in Gegenwart eines radikalischen Initiators mit Komponente D oder D' umgesetzt.

Bevorzugt werden die Komponenten C, D (D') und E in folgenden Molverhältnissen eingesetzt:

$$p\,C + \sum_{k=1}^{n-1} x_k D + \sum_{k=1}^{n-1} y_k E + (\alpha - x_n) D + (\alpha - y_n) E = A$$

wobei C für die hypophosphorige Säure oder deren Salze der Formel II, D für das $\alpha,\beta$-ungesättigte Carbonsäurederivat der Formel III oder für die $\alpha,\beta$-ungesättigte Carbonsäure (D') der Formel IV, E für das Olefin der Formel V und A für den Mono-Carboxylfunktionalisierten Dialkylphosphinsäureester der Formel I steht und weiterhin gilt:

$$\sum_{k=1}^{n} x_k = \alpha \quad \text{und} \quad \sum_{k=1}^{n} y_k = \alpha\,,$$

wobei $\alpha$ = 1 bis 3; 0,01 ≤ $x_k$ und $y_k \leq \alpha$; p = 0,5 bis 3 und n = 1 bis 100 ist.

Bevorzugt wird das erfindungsgemäße Verfahren auch so ausgeführt, dass in einem ersten Schritt 1 die Komponente C in Gegenwart eines radikalischen Initiators mit einer Teilmenge $x_k$ D der Komponente D oder mit einer Teilmenge $x_n$ D' der Komponente D' in einem Schritt 2 die resultierende Reaktionslösung in Gegenwart eines radikalischen Initiators mit der gesamten Menge der Komponente E und in einem Schritt 3 die resultierende Reaktionslösung in Gegenwart eines radikalischen Initiators mit der restlichen Teilmenge ($\alpha$-$x_n$) D der Komponente D oder mit der restlichen Teilmenge ($\alpha$-$x_n$) D' der Komponente D' umgesetzt wird.

Bevorzugt wird in einem ersten Schritt 1 die Komponente C in Gegenwart eines radikalischen Initiators mit einer Teilmenge $y_k$ E der Komponente E in einem Schritt 2 die resultierende Reaktionslösung in Gegenwart eines radikalischen Initiators mit der gesamten Menge der Komponente D oder D' und in einem Schritt 3 die resultierende Reaktionslösung in Gegenwart eines radikalischen Initiators mit der restlichen Teilmenge ($\alpha$-$y_n$) E der Komponente E umgesetzt.

Bevorzugt wird in einem Schritt 1 die Komponente C in Gegenwart eines radikalischen Initiators mit einer Teilmenge $x_k$ D der Komponente D oder mit einer Teilmenge x'n' D' der Komponente D' und in einem Schritt 2 die resultierende Reaktionslösung in Gegenwart eines radikalischen Initiators mit einer Teilmenge $y_k$E der Komponente E umgesetzt, wobei die Schritte 1 und 2 abwechselnd so häufig wiederholt werden, bis die jeweiligen Teilmengen verbraucht sind.

Bevorzugt wird in einem Schritt 1 die Komponente C in Gegenwart eines radikalischen Initiators mit einer Teilmenge $y_k$ E Komponente E und in einem Schritt 2 die resultierende Reaktionslösung in Gegenwart eines radikalischen Initiators mit einer Teilmenge $x_k$ D der Komponente D oder mit einer Teilmenge $x_n$ D' der Komponente D' umgesetzt, wobei die Schritte 1 und 2 abwechselnd so häufig wiederholt werden, bis die jeweiligen Teilmengen verbraucht sind.

Bevorzugt wird in einem Schritt 1 die Komponente C in Gegenwart eines radikalischen Initiators mit Komponente E zu einer Alkylphosphonigen Säure umgesetzt wird und in Schritt 2 die resultierende Reaktionslösung mit einem Alkohol M-OH verestert wird und dabei entstehende Phosphonigsäureester destillativ abgetrennt und dann in einem Schritt 3 in Gegenwart eines radikalischen oder eines basischen Initiators mit Komponente D zum Mono-Carboxylfunktionalisierten Dialkylphosphinsäureester umgesetzt.

Bevorzugt handelt es sich bei dem Initiator um Peroxide bildende Verbindungen und/oder Peroxoverbindungen wie Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azoverbindungen wie Azodüsobutyronitril, 2,2'-Azobis(2-amidinopropan)-dihydrochlorid und/oder 2,2'-Azobis(N,N'-dimethylen-isobutyramidin)-dihydrochlorid.

Bevorzugt handelt es sich bei den $\alpha,\beta$-ungesättigten Carbonsäuren auch um Furan-2-carbonsäure und/oder Thiophen-2-carbonsäure.

Bevorzugt wird der Radikalinitator in Mengen von 0,001 bis 10 Mol-%, bezogen auf die phosphorhaltige Verbindung, eingesetzt.

Bevorzugt wird der Radikalinitator mit einer Geschwindigkeit von 0,01 bis 10 Mol-% Initiator pro Stunde, bezogen auf die phosphorhaltige Verbindung, zudosiert.

Bevorzugt beträgt das Verhältnis von Olefin zu Hypophosphit und/oder hypophosphoriger Säure (auf Mol-Basis) 1 zu 3 bis 3 zu 0,5, insbesondere 1,5 zu 3 bis 2,5 zu 1.

Bevorzugt erfolgt die Umsetzung mit der Olefinkomponente E bei einem Druck des eingesetzten Olefins von 1 bis 100 bar, insbesondere 2 bis 50 bar.

Bevorzugt erfolgt die Umsetzung der Komponente C mit den Komponenten D und/oder E bei einer Temperatur von 0 bis 250°C, insbesondere bei 20 bis 200°C und ganz besonders bevorzugt bei 50 bis 150°C.

Bevorzugt enthält das Flammschutzmittel 0,1 bis 90 Gew.-% der Mischungen nach einem oder mehreren der Ansprüche 1 bis 3 und 0,1 bis 50 Gew.-% weitere Additive, wobei die Summe der Komponenten immer 100 Gew.-% beträgt.

Besonders bevorzugt enthält das Flammschutzmittel 10 bis 80 Gew.-% der Mischungen nach einem oder mehreren der Ansprüche 1 bis 3 und 10 bis 40 Gew.-% weitere Additive, wobei die Summe der Komponenten immer 100 Gew.-% beträgt.

Besonders bevorzugt enthält die flammgeschützte Formmasse 5 bis 30 Gew.-% der Mischungen nach einem oder mehreren der Ansprüche 1 bis 3, 5 bis 9 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Besonders bevorzugt enthalten die Polymer-Formkörper, -Filme, -Fäden und -Fasern 5 bis 30 Gew.-% der Mischungen nach einem oder mehreren der Ansprüche 1 bis 3, 5 bis 90 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Bevorzugt handelt es sich bei den Additiven um Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel.

X kann die gleiche Bedeutung wie Y aufweisen, bevorzugt ist X=H, wenn Y einen der oben genannten organischen Reste darstellt. X kann aber auch der gleiche organische Rest wie Y sein oder es handelt sich bei X und Y um verschiedene organische Reste.

Das erfindungsgemäße Verfahren weist gegenüber des Standes der Technik erhebliche Vorteile auf, da es Phosphonigsäuredihalogenide und andere halogenhaltigen Verbindungen völlig vermeidet. Damit sind auch die erfindungsgemäßen Mono-Carboxylfunktionalisierte Dialkylphosphinsäureester in Form ihrer Mischungen viel weniger korrosiv als die bisher zugänglichen Mono-Carboxylfunktionalisierten Dialkylphosphinsäureester. Die niedrigere Korrosivität ist nicht nur für die Handhabung bei der Herstellung sondern auch beim Einsatz als Flammschutzmittel von Vorteil.

Mit den erfindungsgemäßen Verfahren zur Herstellung werden Mono-Carboxylfunktionalisierte Dialkylphosphinsäure-Ester in völlig halogenfreier Form zugänglich und weisen damit eine so hohe Halogenfreiheit auf, wie sie nach dem bisher bekannten Stand der Technik nicht zugänglich war.
Die erfindungsgemäßen Verfahren bieten den Vorteil, von vornherein von halogenfreien Edukten auszugehen, so dass die Endprodukte ebenfalls völlig halogenfrei sind. Der Gehalt an Halogenen liegt - wenn überhaupt solche enthalten sind - unter der Nachweisgrenze. Dagegen führen alle bisher bekannten Verfahren aus dem Stand der Technik zu wesentlich höheren Halogengehalt im jeweiligen Endprodukt.

Wie vorstehend bereits ausgeführt, wird bei dem erfindungsgemäßen Verfahren Komponente C in Gegenwart eines radikalischen Initiators mit Komponente D oder D' und E in einem Lösungsmittel umgesetzt, wobei die Komponenten D bzw. D' und E nicht gleichzeitig sondern jeweils separat (hintereinander oder nacheinander) dosiert werden. Wird vor oder nach Zugabe von Komponente E die Komponente D (Carbonsäureester) eingesetzt, so wird der erfindungsgemäße Mono-Carboxylfunktionalisierte Dialkylphosphinsäureester direkt erhalten. Bei Einsatz von Komponente D' (freie Carbonsäure) vor oder nach Zugabe von Komponente E wird zunächst die Mono-Carboxylfunktionalisierten Dialkylphosphinsäure (mit Y=H) erhalten, die dann im Folgeschritt mit einem Alkohol YOH zum erfindungsgemäßen Mono-Carboxylfunktionalisierten Dialkylphosphinsäureester A umgesetzt wird.

Überraschenderweise kann durch iterative Umsetzung von $\alpha$,$\beta$-ungesättigte Carbonsäuren oder -estern und Olefinen mit Derivaten der Hypophosphorigen Säure ohne Isolierung der jeweiligen Monoalkylphosphinsäure-Derivate die Mono-Carboxylfunktionalisierten Dialkylphosphinsäure in guten Ausbeuten erhalten werden. Bei der Umsetzung mit einer $\alpha$,$\beta$-ungesättigte Carbonsäure D' wird jeweils noch eine Veresterung mit einem Alkohol YOH durchgeführt, um die freie Mono-Carboxylfunktionalisierte Dialkylphosphinsäure zu erhalten.

Die Veresterung der phosphonigen Säure zum entsprechenden Monoester kann beispielsweise durch Umsetzung mit höhersiedenden Alkoholen unter Entfernung des gebildeten Wassers durch Azeotropdestillation erreicht werden.

Bevorzugt wird der Ester der Alkylphosphonigen Säure destillativ gereinigt.

Bevorzugt handelt es sich bei den basischen Initiatoren um Alkali- und/oder Erdalkalialkoholate. Besonders bevorzugt wird Natrium-Methanolat, Natrium-Ethanolat oder Natrium-Butylat verwendet.

Für das das Verhältnis $\alpha$,$\beta$-ungesättigtes Carbonsäurederivat und Olefine zu Hypophosphit und/oder hypophosphoriger Säure (auf Mol-Basis) gilt bevorzugt $0.01 \leq x_k$ und $y_k \leq \alpha$, $\alpha$ = 1-3, p = 0.5-3.0, und n = 1-100, besonders bevorzugt $0.05 \leq x_k$ und $y_k \leq \alpha$, $\alpha$ = 1-1.5, p = 0.8-1.2, n = 2-20.

Bevorzugt werden anorganische Lösungsmittel (insbesondere Wasser), organische Lösungsmittel oder beliebige Mischungen derselben eingesetzt.

Bei wässrigem Lösungsmittel wird der pH-Wert auf 0 bis 14, bevorzugt auf 2 bis 9 eingestellt.

Bevorzugt wird der pH-Wert mit Mineralsäuren, sauren Salzen, Carbonsäuren, Alkalien und/oder Elektrolyten wie z. B. Natriumbisulfat, Natriumbisulfit und/oder Kaliumbisulfit eingestellt.

Bevorzugt handelt es sich bei den Carbonsäuren um Ameisensäure, Essigsäure, Propionsäure, Buttersäure und/oder längerkettige Carbonsäuren und/oder um deren Dimere, Oligomere und/oder Polymere.

Bevorzugt handelt es sich bei dem Salz der hypophosphorigen Säure um ein Salz dessen Kation ein Element der 1. Hauptgruppe ist und/oder dessen Kation auf ein organisch substituiertes Element der 5. Hauptgruppe basiert. Besonders bevorzugt handelt es um ein Ammonium- oder Alkalisalz, insbesondere um das Natriumsalz.

Bevorzugt stellt man die Hypophosphorige Säure in situ aus Salzen der Hypophosphorigen Säure und mindestens einer Mineralsäure her, wobei das Verhältnis von Additiv-Säure zu Hypophosphit (auf Äquivalentbasis) 0 zu 1 bis 2 zu 1 beträgt.

Besonders bevorzugte Radikalinitiatoren sind Peroxo-Verbindungen wie Peroxomonoschwefelsäure, Kaliumpersulfat (Kaliumperoxomonosulfat), Caroat(TM), Oxone(TM), Peroxodischwefelsäure, Kaliumpersulfat (Kaliumperoxodisulfat), Natriumpersulfat (Natriumperoxodisulfat), Ammoniumpersulfat (Ammoniumperoxodisulfat).

Besonders bevorzugt sind Verbindungen, die im Lösemittelsystem Peroxide bilden können wie Natriumperoxid, Natriumperoxidediperoxohydrat, Natriumperoxiddiperoxohydrathydrat, Natriumperoxidedihydrat, Natriumperoxidoctahydrat, Lithiumper-oxid, Lithiumperoxidmonoperoxohydrattrihydrat, Calciumperoxid, Strontiumperoxid, Bariumperoxid, Magnesiumperoxid, Zinkperoxid, Kaliumhyperoxid, Kaliumperoxid-diperoxohydrat, Natriumperoxoboratetetrahydrat,

Natriumperoxoborattrihydrat, Natriumperoxoboratmonohydrat, Wasserfreies Natrium peroxoborat, Kaliumperoxo-boratperoxohydrat, Magnesiumperoxoborat, Calciumperoxoborat, Bariumperoxo-borat, Strontiumperoxoborat, Kaliumperoxoborat, Peroxomonophosphorsäure, Peroxodiphosphorsäure, Kaliumperoxodiphosphat, Ammoniumperoxodiphosphat, Kaliumammoniumperoxodiphosphate (Doppelsalz), Natriumcarbonatperoxohydrat, Harnstoffperoxohydrat, Ammoniumoxalatperoxid, Bariumperoxidperoxohydrat, Calciumhydrogenperoxide, Calciumperoxidperoxohydrat, Ammoniumtriphosphatediperoxophosphathydrat, Kaliumfluoridperoxohydrat, Kaliumfluoridtriperoxohydrat, Kaliumfluoriddiperoxohydrat, Natriumpyrophosphatdiperoxohydrat, Natriumpyrophosphatdiperoxohydratoctahydrat, Kaliumacetatperoxohydrat, Natriumphosphatperoxohydrat, Natriumsilicatperoxohydrat.

Besonders bevorzugt sind Wasserstoffperoxid, Perameisensäure, Peressigsäure, Benzoylperoxid, Di-t-butylperoxid, Dicumylperoxid, 2,4-Dichlorobenzoylperoxid, Decanoylperoxid, Lauroylperoxid, Cumolhydroperoxid, Pinenhydroperoxid, p-Menthan-hydroperoxid, t-Butylhydroperoxid, Acetylacetoneperoxid, Methylethylketoneperoxid, Bernsteinsäureperoxid, Dicetylperoxydicarbonat, t-Butylperoxyacetat, t-Butyl-peroxymaleinsäure, t-Butylperoxybenzoat, Acetylcyclohexylsulfonylperoxid.

Bevorzugt werden als Radikalstarter wasserlösliche Azo-Verbindungen eingesetzt. Besonders bevorzugt sind Azoinitiatoren wie ®VAZO 52, ®VAZO 64 (AIBN), ®VAZO 67, ®VAZO 88, ®VAZO 68 der Fa. Dupont-Biesteritz, V-70 2,2'-Azobis(4-methoxy-2,4-dimethyl valeronitril),V-65 2,2'-Azobis(2,4-dimethylvaleronitril)V-601 Dimethyl 2,2'-azobis(2-methylpropionat),V-59 2,2'-Azobis(2-methylbutyronitril),V-40, VF-096 1,1'-Azobis(cyclohexane-1-carbonitril),V-30 1-[(cyano-1-methylethyl)azo]formamid, VAm-110 2,2'-Azobis(N-butyl-2-methylpropionamid),VAm-111 2,2'-Azobis(N-cyclohexyl-2-methylpropionamid), VA-046B 2,2'-Azobis[2-(2-imidazolin-2-yl)propandisulfatedihydrate, VA-057 2,2'-Azobis[N-(2-carboxyethyl)-2-methylpropionamidin]tetrahydrat, VA-061 2,2'-Azobis[2-(2-imidazolin-2-yl)propan], VA-080 2,2'-Azobis{2-methyl-N-[1,1-bis(hydroxymethyl)-2-hydroxyethyl] propionamid, VA-085 2,2'-Azobis{2-methyl-N-[2-(1-hydroxybuthyl)]propionamid}, VA-086 2,2'-Azobis[2-methyl-N-(2-hydroxyethyl)-propionamid] von Wako Chemicals.

Weiterhin bevorzugt sind Azoinitiatoren wie 2-t-Butylazo-2-cyanopropan, Dimethylazodiisobutyrat, Azodiisobutyronitril, 2-t-Butylazo-1-cyanocyclohexan, 1-t-Amylazo-1-cyanocyclohexan. Weiterhin sind bevorzugt Alkylperketale wie 2,2-Bis-(t-butylperoxy)butan, Ethyl-3,3-bis(t-butylperoxy)butyrat, 1,1-Di-(t-butylperoxy)cyclohexan.

Bevorzugt wird der Radikalinitiator in Mengen von 0.05 bis 5 Mol-% bezüglich der jeweiligen ungesättigten organischen Komponente D und/oder E eingesetzt. Bevorzugt wird der Radikalinitiator in dem genannten Lösungsmittel eingesetzt.

Bevorzugt werden als $\alpha,\beta$-ungesättigte Carbonsäureester (Komponente D), Acrylsäuremethylester, Acrylsäureethylester, Acrylsäurebutylester, Acrylsäure-tert.-butylester, Acrylsäureisobutylester, Acrylsäure(2-ethylhexyl)ester, Acrylsäure-2-hydroxyethylester, Acrylsäure2-hydroxypropylester, Acrylsäure-2-methoxyethylester, Acrylsäurestearylester, Acrylsäurebehenylester, Methacrylsäuremethylester Methacrylsäureethylester, Methacrylsäurebutylester, Methacrylsäuredodecylester, Methacrylsäureisobornylester, Methacrylsäure-2-hydroxyethylester, Methacrylsäure-2-hydroxypropylester, Methacrylsäurelaurylester, Crotonsäureethylester, Ethyl-(2-cyan-3-ethoxyacrylat), Allylmethacrylat, (2-Dimethylaminoethyl)-methacrylat, 2-(Ethoxyethyl)-methacrylat, 2-(Ethoxyethyl)-acrylat, Ethyl-(3-dimethylamino)-acrylat, 1,6-Hexandioldiacrylat, Dipropylenglykolacrylat, Tripropylenglykolacrylat oder Ethyldiglykolacrylat eingesetzt.

Bevorzugt werden als $\alpha,\beta$-ungesättigte Carbonsäure (Komponente D') Acrylsäure, Methacrylsäure, Crotonsäure, Tiglinsäure (trans 2,3-Dimethylacrylsäure), (trans-) 2-Pentensäure, Furan-2-carbonsäure oder Thiophen-2-carbonsäure eingesetzt.

Bevorzugt werden als Olefine (Komponente E) lineare oder verzweigte Olefine mit einer Kohlenstoffkettenlänge von $C_1$-$C_{18}$ eingesetzt. Besonders bevorzugt sind Ethylen, Propylen, n-Buten und/oder i-Buten oder beliebige Gemische davon, 1-Hexen, 1-Hepten und 1-Octen.

Geeignet sind auch cyclische Olefine, insbesondere Cyclopenten, Cyclohexen, Cyclohexenole, Cyclohexenone, Cyclohepten, Cyclohexenole, Cycloocten, Cyclooctenole oder Cyclooctenone.

Geeignet sind auch funktionalisierte Olefine, bevorzugt Allylisothiocyanat, Allylmethacrylat, 2-Allylphenol, N-Allylthioharnstoff, 2-(Allylthio)-2-thiazolin, Allyltrimethylsillan, Allylacetat, Allylacetoacetat, Allylalkohol, Allylamin, Allylbenzol, Allylcyanid, Allyl-(cyanacetat), Allylanisol, trans-2-Pentenal, cis-2-Pentennitril, 1-Penten-3-ol, 4-Penten-1-ol, 4-Penten-2-ol, trans-2-Hexenal, trans-2-Hexen-1-ol, cis-3-Hexen-1-ol, 5-Hexen-1-ol, Styrol, $\alpha$-Methylstyrol, 4-Methylstyrol, Vinylacetat, 9-Vinylanthracen, 2-Vinylpyridin, 4-Vinylpyridin und 1-Vinyl-2-pyrrolidon.

Zur Veresterung der Mono-Carboxylfunktionalisierten Dialkylphosphinsäure werden Alkohole YOH eingesetzt. Bevorzugt sind lineare oder verzweigte, ein- oder mehrwertige organische Alkohole oder Polyole. Bevorzugt sind primäre, sekundäre oder tertiäre Alkohole mit einer Kohlenstoffkettenlänge von $C_{1-18}$. Besonders bevorzugt sind die gesättigten, einwertigen Alkohole Methanol, Ethanol, Propanol, Isopropanol, n-Butanol, 2-Butanol, tert. Butanol, Amylalkohol und/oder Hexanol.

Als mehrwertige, gesättigte Alkohole werden bevorzugt Ethylenglykol, 1,2-Propylenglykol, 1,3-Propylenglykol, 1,4-Butandiol, 2,2-Dimethylpropan-1,3-diol, Neopentylglykol, 1,6-Hexandiol, 1,4-Cyclohexan-dimethanol, Glycerin, Trishydroxymethylethan, Trishydroxymethylpropan, Pentaerythrit, Sorbit, Mannit, α-Naphthol, Polyethylenglykole, Polypropylenglykole und EO-PO-Blockpolymere eingesetzt. Besonders bevorzugt sind Ethylenglykol, 1,2-Propylenglykol, 1,3-Propylenglykol, 1,4-Butandiol und 1,6-Hexandiol.

Geeignet sind auch ein- oder mehrwertige, ungesättigte Alkohole mit einer Kohlenstoffkettenlänge von $C_{1-18}$ bevorzugt. Besonders sind dann n-Buten-2-ol-1, 1,4-Butendiol und Allylalkohol.

Geeignet sind auch Umsetzungsprodukte von einwertigen Alkoholen mit einem oder mehreren Molekülen von Alkylenoxiden, besonders bevorzugt Ethylenoxid und 1,2-Propylenoxid. Bevorzugt sind 2-Methoxyethanol, 2-Ethoxyethanol, 2-n-Butoxyethanol, 2-(2'-Ethyl-hexyloxy)-ethanol, 2-n-Dodecyloxyethanol, Methyldiglykol, Ethyldiglykol und Isopropyldigtykol, Fettalkoholpolyglykolether und Arylpolyglykolether.

Bevorzugt sind auch Umsetzungsprodukte von mehrwertigen Alkoholen mit einem oder mehreren Molekülen Alkylenoxid, insbesondere Diglykol und Triglykol sowie Addukte von 1-6 Molekülen Ethylenoxid oder Propylenoxid an Glycerin, Trishydroxymethylpropan oder Pentaerythrit.

In einer anderen Ausführung werden bevorzugt Umsetzungsprodukte von Wasser mit einem oder mehreren Molekülen Alkylenoxid eingesetzt. Bevorzugt sind Polyethylenglykole und Poly-1,2-propylenglykole verschiedener Molekulargrößen mit einem mittleren Molgewicht von 100-1000 g/mol, besonders bevorzugt von 150-350 g/mol.

Bevorzugt sind auch Umsetzungsprodukte von Ethylenoxid mit Poly-1,2-propylenglykolen oder Fettalkoholpropylenglykole; ebenso Umsetzungsprodukte von 1,2-Propylenoxid mit Polyethylenglykolen oder Fettalkoholethoxylaten. Bevorzugt sind solche Umsetzungsprodukte mit einem mittleren Molgewicht von 100 bis 1000 g/mol, besonders bevorzugt von 150 bis 450 g/mol.

Einsetzbar sind auch Umsetzungsprodukte von Alkylenoxiden mit Ammoniak, primären oder sekundären Aminen, Schwefelwasserstoff, Mercaptanen, Sauerstoffsäuren des Phosphors, $C_2$-$C_6$-Carbonsäuren und $C_2$-$C_6$-Dicarbonsäuren. Besonders bevorzugte Umsetzungsprodukte von Ethylenoxid mit Stickstoffverbindungen sind Triethanolamin, Methyldiethanolamin, n-Butyldiethanolamin, n-Dodecyl-diethanolamin, Dimethylethanolamin, n-Butyl-methylethanolamin, Di-n-butyl-ethanolamin, n-Dodecylmethyl-ethanolamin, Tetrahydroxyethyl-ethylendiamin oder Pentahydroxyethyl-diethylentriamin

Bevorzugt besteht die Atmosphäre bei der Umsetzung mit dem α,β-ungesättigten Carbonsäurederivat (Komponente D oder D') zu 50 bis 99,9 Gew.-% aus Bestandteilen des Lösungsmittels und α,β-ungesättigten Carbonsäure, bevorzugt, 70 bis 95 %.

Bevorzugt besteht die Atmosphäre bei der Umsetzung mit dem Olefin (Komponente E) zu 50 bis 99,9 Gew.-% aus Bestandteilen des Lösungsmittels und Olefin, bevorzugt zu 70 bis 95 Gew.-%.

Bevorzugt enthält die Atmosphäre gasförmige Komponenten, die nicht an der Reaktion teilnehmen.

Bevorzugt handelt es sich bei den gasförmigen Komponenten um Sauerstoff, Stickstoff, Kohlendioxid, Edelgase, Wasserstoff und/oder Alkane.

Bevorzugt erfolgt die Umsetzung während des Zusatz des α,β-ungesättigten Carbonsäurederivates (Komponente D oder D') bei einem Druck von 1 - 20 bar.

Bevorzugt erfährt die Reaktionslösung bei der Umsetzung der Komponente C mit den Komponenten D bzw. D' oder E eine Mischintensität, die einer Rotations-Reynolds-Zahl von 1 bis 1000000, bevorzugt von 100 bis 100000 entspricht.

Bevorzugt erfolgt eine intensive Durchmischung von Olefin, α,β-ungesättigten Carbonsäurederivat, Radikalinitiator, Lösungsmittel und Hypophosphoriger Säure und/oder deren Salzen unter einem Energieeintrag von 0,083 bis 10 $kW/m^3$, bevorzugt 0,33 - 1,65 $kW/m^3$.

Bevorzugte Apparate sind Rührkessel, Rührkesselkaskaden, Strömungsrohre, Blasensäulen und Wäscher.

Der Eintrag von gasförmigen Olefinkomponenten erfolgt bevorzugt durch Düsen (z. B. Venturidüsen), Begasungsrührer, Turbinenrührer oder Scheibenrührer.

Die Erfindung betrifft auch Flammschutzmittel, die die erfindungsgemäßen halogenarmen Mono-Carboxylfunktionalisierten Dialkylphosphinsäureester enthalten.

Bevorzugt ist ein Flammschutzmittel, enthaltend 0,1 bis 90 Gew.-% der halogenarmen Mono-Carboxylfunktionalisierten Dialkylphosphinsäureester und 0,1 bis 50 Gew.-% weitere Additive, besonders bevorzugt Diole.

Bevorzugt ist ein Flammschutzmittel, enthaltend 10 bis 80 Gew.-% der halogenarmen Mono-Carboxylfunktionalisierten Dialkylphosphinsäureester und 10 bis 40 Gew.-% weitere Additive, besonders bevorzugt Diole.

Bevorzugte Additive zu den erfindungsgemäßen stabilisierten Flammschutzmitteln sind Antioxidantien wie aromatische Amine, sterisch gehinderte Phenole (Butyliertes Hydroxotoluol (BHT)), Thiobisphenol, höhermolekulare Polyphenole, Tetrakis(methylen[2,5-di-tert-butyl-4-hydroxyhydrocinnamat])methan (®Irganox 1010), Octadecyl-3,5-di-tert-butyl-4-hydroxyhydrocinnamat (®Irganox 1076), Organophosphite (Tris(nonylphenyl)phosphit (TNPP)), Thioester (Distearyl-3,3'-thiodipropionate, Di-tridecyl-3,3'-thiodipropionat, Dilauryl-3,3'-thiodipropionat), Metalldeaktivatoren (®Irganox 1024), Vitamin E (alpha-Tocopherol), Lacton, Hydroxylamin.

Bevorzugte Additive sind auch Antistatica wie Fettsäureester (Glycerin, Polyethylenglykolester, Sorbitolester), Quartärnäre Ammoniumverbindungen, Ethoxylierte Amine und Alkylsulfonate.

Bevorzugte Additive sind auch Treibmittel wie Azodicarbonamid, p,p-Oxybis(benzolsulfonylhydrazid) (OBSH), 5-Phenyltetrazol (5PT), p-Toluolsulfonylsemicarbazid (TSSC) und Trihydrazintriazin (THT).

Bevorzugte Additive sind auch Aluminiumtrihydrat, Antimonoxid, bromierte aromatische oder cycloaliphatische Kohlenwasserstoffe, Phenole, Ether, Chlorparaffin, Hexachlorocyclopentadien-Adducte (®Dechloran Plus, Occidental Chemical Co), Roter Phosphor, Melaminderivate, Melamincyanurate, Ammoniumpolyphosphate und Magnesiumhydroxid.

Bevorzugte Additive sind ebenfalls Hitzestabilisatoren wie Bleistabilisatoren Dibasisches Bleiphthalat, Dibasisches Bleistearat, Bleisilicat, Monobasisches und tribasisches Bleisulfat, Dibasisches Bleicarbonat, Dibasisches Bleiphosphit), Gemischt-Metall-Salze (Barium-Cadmium-Salze von, Barium-Zink-Salze und Calcium-Zink-Salze von 2-Ethylhexylcarbonsäure, Searinsäure, Ricinoleinsäure und/oder Laurinsäure bzw. substituierte Phenole, Organozinn-Stabilisatoren (Mono- und Dialkylzinnmercaptide, (Thioglyr-olate), Dialkylzinncarboxylate (Maleate, Laurate, Zinnester), Sekundäre Hitzestabilisatoren (Alkyl-/Arylorganophosphite, Epoxyverbindungen ungesättigter Fettsäuren und Fettsäureester).

Bevorzugte Additive sind auch Schlagzähmodifikatoren/Prozesshilfsmittel wie Acrylate, Acryl-nitril-Butadien-Styrol (ABS), Chloriertes Polyethylen (CPE), Ethylen-Propylen Terpolymer (EPT), Ethalen-Vinylacetat (EVA), Methacrylat-Butadien-Styrol (MBS).

Bevorzugte Additive sind weiterhin Gleitmittel wie Fettsäureamide (Fettsäuremonoamide, Fettsäurebisamide, Oleamide, Erucamide, Ethylen-bis-stearamid (EBSA), Ethylen-bis-oleamid (EBSA)), Fettsäuren-/Fettsäureester ($C_{16}$-$C_{18}$ (Palmfettsäure, Stearinsäure, Ölsäure)), Fettsäurealkohole (Cetylalkohol, Stearylalkohol), Wachse (Paraffinwachse, Polyethylenwachse), Metallstearate (Calciumstearat, Zinkstearat, Magnesiumstearat, Bariumstearat, Aluminiumstearat, Cadmiumstearat und Bleistearat).

Bevorzugte Additive sind auch Lichtschutzmittel wie UV-Absorber (Alkylsubstituierte Hydroxybenzophenone z.B. 2-Hydroxy-4-Alkoxybenzophenone, Alkylsubstituierte Hydroxybenzothiazole z.B. 2-Hydroxy-3,5-dialkylbenzotriazole), UV-Quencher (Nickel- und Zink diethyldithiocarbamat, n-Butylamin-Nickel-2,2'-thiobis-(4-t-octylphenolat), Nickel-bis(3,5-di-t-butyl-4-hydroxybenzyl)phosphonsäure monoethylester), Radikalinhibitoren (Bis-(2,2',6,6'-tetramethyl-4-piperidyl)sebacat (HALS)) und Hydroperoxidzersetzer (Dithiophosphate).

Bevorzugt sind weiterhin Antidrippingmittel, Compatibilizer, Füllstoffe, Verstärkungsstoffe, Keimbildungsmittel, Nukleierungsmittel, Additive zur Lasermarkierung, Hydrolysestabilisatoren, Kettenverlängerer, Farbpigmente, Weichmacher und Plastifizierungsmittel.

Insbesondere betrifft die Erfindung die Verwendung der erfindungsgemäßen Mono-Carboxylfunktionalisierten Dialkylphosphinsäureester als Flammschutzmittel für thermoplastische Polymere wie Polyester, Polystyrol oder Polyamid und für duroplastische Polymere wie ungesättigte Polyesterharze, Epoxidharze, Polyurethane oder Acrylate.

Insbesondere betrifft die Erfindung die Verwendung der erfindungsgemäßen Mono-Carboxylfunktionalisierten Dialkylphosphinsäureester als Zwischenstufe zur Herstellung von Flammschutzmitteln für thermoplastische Polymere wie Polyester, Polystyrol oder Polyamid und für duroplastische Polymere wie ungesättigte Polyesterharze, Epoxidharze, Polyurethane oder Acrylate.

Die Erfindung betrifft auch die Verwendung der erfindungsgemäßen Mono-Carboxylfunktionalisierten Dialkylphosphinsäureester als Zwischenstufe zur Herstellung von Flammschutzmitteln oder als Flammschutzmittel für thermoplastische Polymere wie Polyester, Polystyrol oder Polyamid und für duroplastische Polymere wie ungesättigte Polyesterharze, Epoxidharze, Polyurethane oder Acrylate.

Geeignete Polyester leiten sich von Dicarbonsäuren und Diolen und/oder von Hydroxycarbonsäuren oder den entsprechenden Lactonen ab.

Bevorzugt werden als Dicarbonsäure-Komponenten oder deren Ester Terephthalsäure, Isophthalsäure, 5-Sulfoisophthalsäure, 5-Sulfopropoxyisophthalsäure, Naphthalin-2,6-dicarbonsäure, Diphenyl-p,p'-dicarbonsäure, Diphenoxyalkan-dicarbon-säuren, trans-Hexahydroterephthalsäure, Adipinsäure, Sebacinsäure oder 1,2-Cyclobutandicarbon-säure eingesetzt. Besonders bevorzugt wird Terephthalsäure eingesetzt.

Besonders bevorzugt wird Terephthalsäure als Hauptkomponente eingesetzt.

Bevorzugt beträgt die Summe der Dicarbonsäure-Cokomponenten maximal 10 mol-% der gesamten Dicarbonsäure-Komponente.

Bevorzugt wird für die Polyesterherstellung die Diol-Komponente rein oder als Cokomponente zu einem anderen Diol eingesetzt.

Bevorzugt werden für die Polyesterherstellung als Diol-Komponenten Ethylenglykol, Propan-1,3-diol, Butan-1,3-diol und die höheren Homologe es Butan-1,3-diols, 2,2-Dimethylpropan-1,3-diol oder 1,4-Cyclohexandimethanol eingesetzt, besonders bevorzugt Ethylenglykol. Dabei beträgt die Summe der Diol-Cokomponenten für die Polyesterherstellung bevorzugt maximal 10 mol-% der gesamten Diolkomponente.

Bevorzugt wird für die Polyesterherstellung Ethylenglykol als Hauptkomponente eingesetzt.

Geeignete Polyester sind Polyethylenterephthalat, Polybutylenterephthalat (®Celanex 2500, ®Celanex 2002, Fa Celanese; ®Ultradur, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Synthetische lineare Polyester mit permanentem Flammschutz setzen sich aus Dicarbonsäure-Komponenten, Diol-Komponenten der erfindungsgemäßen halogenarme Mono-Carboxylfunktionalisierten Dialkylphosphinsäureester oder aus der nach dem erfindungsgemäßen Verfahren hergestellten Mono-Carboxylfunktionalisierten Dialkylphosphinsäureester als Phosphor enthaltende Kettenglieder zusammen. Die Phosphor enthaltenden Kettenglieder machen 2-20 % der Dicarbonsäure-Komponente des Polyesters aus. Bevorzugt beträgt der resultierende Phosphorgehalt im Polyester 0.1-5%, besonders bevorzugt 0.5-3%.

Bevorzugt wird zur Herstellung der Formmasse ausgehend von den freien Dicarbonsäure und Diolen zunächst direkt verestert und dann polykondensiert.

Bevorzugt wird ausgehend von Dicarbonsäureestern, insbesondere Dimethylestern, zunächst umgeestert und dann unter Verwendung der hierfür üblichen Katalysatoren polykondensiert.

Bevorzugt können bei der Polyesterherstellung neben den gängigen Katalysatoren auch übliche Additive (Vernetzungsmittel, Mattierungs- und Stabilisierungsmittel, Nukleierungsmittel, Farb- und Füllstoffe etc.) zugesetzt werden.

Bevorzugt werden die erfindungsgemäßen Mischungen vor, während oder kurz vor Ende der Polykondensation zugegeben.

Bevorzugt findet die Veresterung bei Temperaturen von 100 - 300°C statt, besonders bevorzugt 150 - 250°C.

Bevorzugt findet die Polykondensation bei Drücken zwischen 0.1 bis 1.5 mbar und Temperaturen von 150 - 450°C statt, besonders bevorzugt bei 200 - 300°C.

Die erfindungsgemäß hergestellten, flammgeschützten Polyester-Formmassen werden bevorzugt in Polyester-Formkörpern eingesetzt.

Bevorzugte Polyester-Formkörper sind Fäden, Fasern, Folien und Formkörper, die als Dicarbonsäure-Komponente hauptsächlich Terephthalsäure und als Diolkomponente hauptsächlich Ethylenglykol enthalten.

Bevorzugtes Verfahren zur Herstellung von Fäden und Fasern ist das Verspinnen, Verstrecken und Nachbehandeln. Bevorzugte Verfahren zur Herstellung von Folien sind die Extrusion, das Verpressen, und das Spritzgießen.

Bevorzugt beträgt der resultierende Phosphorgehalt in aus flammgeschützten Polyester hergestellten Fäden und Fasern 0.1 - 18 %, bevorzugt 0.5 - 15 %.

Bevorzugt beträgt der resultierende Phosphorgehalt in aus flammgeschützten Polyester hergestellten Folien 0.2 - 15 %, bevorzugt 0.9 - 12 %

Bevorzugt können die erfindungsgemäß flammgeschützten Polyester-Fäden in Einkomponentenfäden oder auch als eine Komponente in Bikomponentenfäden zusammen mit anderen Polymeren verwendet werden.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrot-Isopren-Styrol, Styrol-Ethylen/Butylen-Styrol oder Styrol-Ethylen/Propylen-Styrol.

Bevorzugt handelt es sich bei den geeigneten Polystyrolen auch um Pfropfcopolymere von Styrol oder alpha-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z.B. als so genannte ABS-, MBS-, ASA- oder AES-Polymere bekannt sind.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2,12, Polyamid 4 (Poly-4-aminobuttersäure, ®Nylon 4, Fa. DuPont), Polyamid 4,6 (Poly(tetramethylenadipamid), Poly-(tetramethylen-adipinsäurediamid), ®Nylon 4/6, Fa. DuPont), Polyamid 6 (Polycaprolactam, Poly-6-aminohexansäure, ®Nylon 6, Fa. DuPont, ®Akulon K122, Fa. DSM; ®Zytel 7301, Fa. DuPont; ®Durethan B 29, Fa. Bayer), Polyamid 6,6 ((Poly (N,N'-hexamethyleneadipinediamid), ®Nylon 6/6 , Fa. DuPont, ®Zytel 101, Fa. DuPont; ®Durethan A30, ®Durethan AKV, ®Durethan AM, Fa. Bayer; ®Ultramid A3, Fa. BASF), Polyamid 6,9 (Poly(hexamethylen nonanediamid), ®Nylon 6/9, Fa. DuPont), Polyamid 6,10 (Poly(hexamethylen sebacamid), ®Nylon 6/10, Fa. DuPont), Polyamid 6,12 (Poly (hexamethylene dodecanediamid), ®Nylon 6/12, Fa. DuPont), Polyamid 6,66 (Poly(hexamethylene adipamide-co-caprolactam),®Nylon 6/66 , Fa. DuPont), Polyamid 7 (Poly-7-aminoheptansäure, ®Nylon 7, Fa. DuPont), Polyamid 7,7 (Polyheptamethylenpimelamid, ®Nylon 7,7, Fa. DuPont), Polyamid 8 (Poly-8-aminooctansäure, ®Nylon 8, Fa. DuPont), Polyamid 8,8 (Polyoctamethylensuberamid, ®Nylon 8,8, Fa. DuPont), Polyamid 9 (Poly-9-aminononansäure, ®Nylon

9, Fa. DuPont), Polyamid 9,9 (Polynonamethylenazelamid, ®Nylon 9,9, Fa. DuPont), Polyamid 10 (Poly-10-aminodecansäure, ®Nylon 10, Fa. DuPont), Polyamid 10,9 (Poly(decamethylenazelamid), ®Nylon 10,9, Fa. DuPont), Polyamid 10,10 (Polydecamethylensebacamid, ®Nylon 10,10, Fa. DuPont), Polyamid 11 (Poly-11-aminoundecansäure, ®Nylon 11, Fa. DuPont), Polyamid 12 (Polylauryllactam, ®Nylon 12 , Fa. DuPont, ®Grillamid L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z.B. Poly-2,4,4-trimethylhexamethylen-terephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die erfindungsgemäßen Mischungen werden bevorzugt in Formmassen angewendet, die weiter zur Erzeugung von Polymer-Formkörpern verwendet werden. Bevorzugtes Verfahren zur Herstellung von Polymer-Formkörpern ist das Spritzgießen.

Beispiel 1 (Vergleich mit dem Stand der Technik)

Nach dem Stand der Technik (V.K. Chajrullin, R. R. Shagidullin, Z. Obschei. Khim. 36 (1966), S. 289-296) wurden 393 g (3 mol) Ethyldichlorphosphan mit Acrylsäure und Methanol umgesetzt. Es wurden 326g (56% der Theorie) 3-(Ethylmethoxyphosphinyl)-Propionsäuremethylester als farbloses Öl erhalten; Chlorgehalt: 453 ppm.

Beispiel 2

636 g (6 mol) Natriumhypophosphit-Monohydrat wurden in 860 g Wasser gelöst in einem Druckreaktor (Glasautoklaven) vorgelegt. Bei Normaldruck wurde innerhalb von 2 h bei 65-80°C aus verschiedenen Vorlagen 432 g (6 mol) Acrylsäure und 73,4 g einer 7%igen Wasserstoffperoxid-Lösung (2.5 Mol-% bzgl. Acrylsäure) zugetropft. Anschließend wurden bei 80-105°C über ein auf 3 bar eingestelltes Reduzierventil Ethylen bis zur Sättigung in den Reaktor eingeleitet. Über einen Zeitraum von 6 h wurde unter ständigem Rühren (Energieeintrag von 0,8 $kW/m^3$) bei einem Ethylendruck von 2.5-2.9 bar und einer Temperatur von 80-105°C 73.4 g einer 7 %igen Wasserstoffperoxid-Lösung (2.5 Mol-% bzgl. Ethylen) gleichmäßig zudosiert.
Nach dem Entspannen wurde die wässrige Lösung mit ca. 5 g konzentrierter Schwefelsäure sauer gestellt und das Wasser im Vakuum abdestilliert. Der Rückstand wurde in Tetrahydrofuran aufgenommen und extrahiert. Die unlöslichen Salze wurden abfiltriert. Das Lösungsmittel des Filtrats wurde im Vakuum abgetrennt und der Rückstand aus Aceton umkristallisiert. Es wurden 732 g (74 % der Theorie) 3-(Ethylhydroxyphosphinyl)-Propionsäure als farbloser Feststoff erhalten. 664 g (4.0 mol) der erhaltenen 3-(Ethylhydroxyphosphinyl)-Propionsäure wurden bei 80°C in 400 ml Toluol gelöst und mit 402 g (3.4 mol) 1,6-Hexandiol versetzt und in einer Destillationsapparatur mit Wasserabscheider bei 90-110°C während 4 h verestert. Nach beendeter Veresterung wurde das Toluol im Vakuum abgetrennt. Es wurden 607 g (67 % der Theorie) 3-(Ethylhydroxyphosphinyl)-Propionsäure-(6-hydroxyhexyl)-ester als farbloses Öl erhalten; Chlorgehalt: < 0.1 ppm.

Beispiel 3

Es wurden 636 g (6 mol) Natriumhypophosphit-Monohydrat gelöst in 860 g Wasser, analog Beispiel 2 zuerst mit 432 g (6 mol) Acrylsäure bei 65-80°C in Gegenwart von 428 g einer 5 %igen Natriumperoxodisulfat-Lösung (1.5 mol-% bzgl. Acrylsäure) versetzt. Das resultierende Reaktionsgemisch wurde anschließend in Gegenwart von 428 g einer 5 %igen Natriumperoxodisulfat-Lösung (1.5 mol-% bzgl. Propylen) mit Propylen umgesetzt. Nach entsprechender Aufarbeitung wurden 655 g (61 % der Theorie) 3-(Propylhydroxyphosphinyl)-Propionsäure als farbloser Feststoff erhalten. 540 g (3.0 mol) der erhaltenen 3-(Propylhydroxyphosphinyl)-Propionsäure wurden bei 85°C in 400 ml Toluol gelöst und mit 372 g (6.0 mol) Ethylenglykol versetzt und in einer Destillationsapparatur mit Wasserabscheider bei 80-110°C während 2 h verestert. Nach beendeter Veresterung wurde das Toluol und überschüssiges Ethylenglykol im Vakuum abgetrennt. Es wurden 471 g (70 % der Theorie) 3-(Propylhydroxyphosphinyl)-Propionsäure-(2-hydroxyethyl)-ester als farbloses Öl erhalten; Chlorgehalt: < 0.1 ppm.

Beispiel 4

Es wurden 636 g (6 mol) Natriumhypophosphit-Monohydrat gelöst in 424 g Wasser, analog Beispiel 2 zuerst mit 468 g (6.5 mol) Acrylsäuremethylester bei 85-95°C in Gegenwart von 290 g einer 8 %igen Natriumperoxodisulfat-Lösung (1.5 mol-% bzgl. Acrylsäuremethylester) versetzt. Das resultierende Reaktionsgemisch wurde anschließend in

Gegenwart von 277 g einer 8 %igen Natriumperoxodisulfat-Lösung (1.5 mol-% bzgl. Ethylen) mit Ethylen umgesetzt. Nach entsprechender Aufarbeitung wurden 821 g (76 % der Theorie) 3-(Ethylhydroxyphosphinyl)-Propionsäure-methylester als farbloses Öl erhalten; Chlorgehalt: < 0.1 ppm.

Beispiel 5

Es wurden 636 g (6 mol) Natriumhypophosphit-Monohydrat gelöst in 424 g Wasser und 200 g Essigsäure, analog Beispiel 2 zuerst mit 781 g (6.1 mol) Acrylsäurebutylester bei 95-100°C in Gegenwart von 150 g einer 5 %igen Azoisobutyronitril AIBN Lösung (0.75 mol-% bzgl. Acrylsäurebutylester) versetzt. Das resultierende Reaktionsgemisch wurde anschließend in Gegenwart von 150 g einer 5 %igen Azoisobutyronitril AIBN Lösung (0.75 mol-% bzgl. Propylen) bei 130-140°C mit Propylen umgesetzt. Nach entsprechender Aufarbeitung wurden 893 g (63 % der Theorie) 3-(Propylhydroxyphosphinyl)-Propionsäurebutylester als farbloses Öl erhalten; Chlorgehalt: < 0.1 ppm.

Beispiel 6

Ein Gemisch von 792 g einer 50 %igen wässrigen Lösung von Hypophosphoriger Säure (6 mol) und 300 g Essigsäure wurden in einem Druckreaktor (Glasautoklaven) vorgelegt. Nach Aufheizen der Reaktionsmischung auf 115°C wurde über ein auf 3 bar eingestelltes Reduzierventil Butylen bis zur Sättigung in den Reaktor eingeleitet. Über einen Zeitraum von 6 h wurde unter ständigem Rühren bei einem Butylendruck von 2.5-2.9 bar und einer Temperatur von 125-145°C eine Lösung von 51.6 g einer 5 %igen, essigsauren Azoisobutyronitril AIBN Lösung (0.5 mol-% bzgl. Butylen) gleichmäßig zudosiert. Nach Entspannen wurde bei Normaldruck innerhalb von 3h bei 90-100°C aus verschiedenen Vorlagen 432 g (6 mol) Acrylsäure und 51.6 g einer 5%igen, essigsauren AIBN-Lösung (0.5 mol-% bzgl. Acrylsäure) zugetropft.
Dann wurde das aus Wasser und Essigsäure bestehende Lösungsmittel im Vakuum abdestilliert und der Rückstand aus Aceton/Dioxan (3:1) umkristallisiert. Es wurden 695 g (60% der Theorie) 3-(Butylhydroxyphosphinyl)-Propionsäure als farbloser Feststoff erhalten. 582 g (3.0 mol) der erhaltenen 3-(Butylhydroxyphosphinyl)-Propionsäure wurden bei 90°C in 400 ml Toluol gelöst und mit 298 g (4.8 mol) Ethylenglykol versetzt und in einer Destillationsapparatur mit Wasserabscheider bei 80-110°C während 5h verestert. Nach beendeter Veresterung wurde das Toluol im Vakuum abgetrennt. Es wurden 486 g (68 % der Theorie) 3-(Butylhydroxyphosphinyl)-Propionsäure-(2-hydroxyethyl)-ester als farbloses Öl erhalten; Chlorgehalt: < 0.1 ppm.

Beispiel 7

636 g (6 mol) Natriumhypophosphit-Monohydrat wurden in 860 g Wasser gelöst in einem Druckreaktor (Glasautoklaven) vorgelegt. Nach Aufheizen der Reaktionsmischung auf 100°C wurde über ein auf 3 bar eingestelltes Reduzierventil Ethylen bis zur Sättigung in den Reaktor eingeleitet. Über einen Zeitraum von 4 h wurde unter ständigem Rühren bei einem Ethylendruck von 2.5-2.9 bar und einer Temperatur von 100-130°C 428.4 g einer 5 %igen Natriumperoxodisulfat-Lösung (1.5 Mol-% bzgl. Ethylen) gleichmäßig zudosiert. Nach Entspannen wurde bei Normaldruck innerhalb von 1h bei 90-100°C aus verschiedenen Vorlagen 602 g (7 mol) Methacrylsäure und 500 g einer 5 %igen Natriumperoxodisulfat-Lösung (1.5 Mol-% bzgl. Methacrylsäure) zugetropft.

Dann wurde die wässrige Lösung mit ca. 5 g konzentrierter Schwefelsäure sauer gestellt und das Wasser im Vakuum abdestilliert. Der Rückstand wurde in Tetrahydrofuran aufgenommen und extrahiert. Die unlöslichen Salze wurden abfiltriert. Das Lösungsmittel des Filtrats wurde im Vakuum abgetrennt und der Rückstand aus Aceton umkristallisiert. Es wurden 591 g (55 % der Theorie) 3-(Ethylhydroxyphosphinyl)-2-methyl-Propionsäure als farbloser Feststoff erhalten. 540 g (3.0 mol) der erhaltenen 3-(Ethylhydroxyphosphinyl)-2-methyl-Propionsäure wurden bei 80°C in 400 ml Toluol gelöst und mit 297 g (3.3 mol) 1,4-Butandiol versetzt und in einer Destillationsapparatur mit Wasserabscheider bei 80-110°C während 4h verestert. Nach beendeter Veresterung wurde das Toluol im Vakuum abgetrennt. Es wurden 507 g (67 % der Theorie) 3-(Ethylhydroxyphosphinyl)-2-methyl-Propionsäure-(4-hydroxybutyl)-ester als farbloses Öl erhalten; Chlorgehalt: < 0.1 ppm.

Beispiel 8

636 g (6 mol) Natriumhypophosphit-Monohydrat wurden in 860 g Wasser gelöst in einem Druckreaktor (Glasautoklaven) vorgelegt. Nach Aufheizen der Reaktionsmischung auf 100°C wurde über ein auf 3 bar eingestelltes Reduzierventil Ethylen bis zur Sättigung in den Reaktor eingeleitet. Über einen Zeitraum von 4 h wurde unter ständigem Rühren bei einem Ethylendruck von 2.5-2.9 bar und einer Temperatur von 60-70°C 91.86 g einer 7 %igen Wasserstoffperoxid-Lösung (3.0 mol-% bzgl. Ethylen) gleichmäßig zudosiert. Nach Entspannen wurde bei Normaldruck innerhalb von 2 h bei 65-75°C aus verschiedenen Vorlagen 731.5 g (6.3 mol) Acrylsäurehydroxyethylester und 91,86 g einer 7

%igen Wasserstoffperoxid-Lösung (3.0 mol-% bzgl. Acrylsäurehydroxyethylester) zugetropft.
Dann wurde die wässrige Lösung mit ca. 5g konzentrierter Schwefelsäure sauer gestellt und das Wasser im Vakuum abdestilliert. Der Rückstand wurde in Tetrahydrofuran aufgenommen und extrahiert. Die unlöslichen Salze wurden abfiltriert. Das Lösungsmittel des Filtrats wurde im Vakuum abgetrennt. Es wurden 920 g (73 % der Theorie) 3-(Ethylhydroxyphosphinyl)-Propionsäure-(2-hydroxyethyl)-ester als farbloses Öl erhalten; Chlorgehalt: < 0.1 ppm.

Beispiel 9

Es wurden 636 g (6 mol) Natriumhypophosphit-Monohydrat gelöst in 860 g Wasser, analog Beispiel 7 zuerst mit Propylen bei 140-145 °C in Gegenwart von 609 g einer 5 %igen Natriumperoxodisulfat-Lösung (2.0 mol-% bzgl. Propylen) versetzt. Das resultierende Reaktionsgemisch wurde anschließend in Gegenwart von 590 g einer 5 %igen Natriumperoxodisulfat-Lösung (2.0 mol-% bzgl. Methacrylsäure-2-hydroxypropylester) bei 95-100°C mit 893.4 g (6.2 mol) Methacrylsäure-2-hydroxypropylester umgesetzt. Nach entsprechender saurer Aufarbeitung wurden 802 g (53 % der Theorie) 3-(Propylhydroxyphosphinyl)-2-methyl-Propionsäure-(2-hydroxypropyl)-ester als farbloses Öl erhalten; Chlorgehalt: < 0.1 ppm.

Beispiel 10

Es wurden 636 g (6 mol) Natriumhypophosphit-Monohydrat gelöst in 860 g Wasser, analog Beispiel 7 zuerst mit Ethylen bei 120-135°C in Gegenwart von 590 g einer 5 %igen Natriumperoxodisulfat-Lösung (2.0 mol-% bzgl. Ethylen) versetzt. Das resultierende Reaktionsgemisch wurde anschließend in Gegenwart von 590 g einer 5 %igen Natriumperoxodisulfat-Lösung (2.0 Mol-% bzgl. Allylmethacrylat) mit 782.4 g (6.2 mol) Allylmethacrylat umgesetzt. Nach entsprechender saurer Aufarbeitung wurden 740 g (56 % der Theorie) 3-(Ethylhydroxyphosphinyl)-2-methyl-Propionsäureallylester als farbloses Öl erhalten; Chlorgehalt: < 0.1 ppm.

Beispiel 11

636 g (6 mol) Natriumhypophosphit-Monohydrat wurden in 860 g Wasser gelöst in einem Druckreaktor (Glasautoklaven) vorgelegt. Nach Aufheizen der Reaktionsmischung auf 120°C wurde über ein auf 3 bar eingestelltes Reduzierventil 1 Hexen bis zur Sättigung in den Reaktor eingeleitet. Über einen Zeitraum von 1 h wurde unter ständigem Rühren (Energieeintrag von 1,1 kW/m$^3$) bei einem Hexendruck von 2.5-2.9 bar und einer Temperatur von 120-140°C 142.8 g einer 5%igen Natriumperoxodisulfat-Lösung (1.5 Mol-% bzgl. 1-Hexen) gleichmäßig zudosiert. Nach Entspannen wurde bei Normaldruck innerhalb von 2h bei 90-100 °C aus verschiedenen Vorlagen 432 g (6 mol) Acrylsäure und 428 g einer 5%igen Natriumperoxodisulfat-Lösung (1.5 Mol-% bzgl. Acrylsäure) zugetropft. Nach Aufheizen der Reaktionsmischung auf 120°C wurde wieder über ein auf 3 bar eingestelltes Reduzierventil 1-Hexen bis zur Sättigung in den Reaktor eingeleitet.
Über einen Zeitraum von 6 h wurde unter ständigem Rühren bei einem Hexendruck von 2.5-2.9 bar und einer Temperatur von 120-140°C 428 g einer 5%igen Natriumperoxodisulfat-Lösung (1,5 mol-% bzgl. 1-Hexen) gleichmäßig zudosiert. Dann wurde die wässrige Lösung mit ca. 5g konzentrierter Schwefelsäure sauer gestellt und das Wasser im Vakuum abdestilliert. Der Rückstand wurde in Tetrahydrofuran aufgenommen und extrahiert. Die unlöslichen Salze wurden abfiltriert. Das Lösungsmittel des Filtrats wurde im Vakuum abgetrennt und der Rückstand aus Amylalkohol/Aceton (2: 1) umkristallisiert. Es wurden 769 g (60 % der Theorie) 3 (Hexylhydroxyphosphinyl)-Propionsäure als farbloser Feststoff erhalten. 667 g (3.0 mol) der erhaltenen 3-(Hexylhydroxyphosphinyl)-Propionsäure wurden bei 80°C in 400 ml Toluol gelöst und mit 228 g (3.0 mol) 1,3-Propandiol versetzt und in einer Destillationsapparatur mit Wasserabscheider bei 80-110°C während 5 h verestert. Nach beendeter Veresterung wurde das Toluol im Vakuum abgetrennt. Es wurden 547 g (65 % der Theorie) 3-(Hexylhydroxyphosphinyl)-Propionsäure-(3-hydroxypropyl)-ester als farbloses Öl erhalten; Chlorgehalt: < 0.1 ppm.

Beispiel 12

Es wurden 636 g (6 mol) Natriumhypophosphit-Monohydrat und 15 g konzentrierte Schwefelsäure in 860 g Wasser gelöst. Das Gemisch wurde analog Beispiel 11 zuerst innerhalb von 2 h in Gegenwart von 214 g einer 5%igen Natriumperoxodisulfat-Lösung (1.5 mol-% bzgl. Propylen) mit Propylen umgesetzt. Dann wurde es mit 516.5 g (6 mol) Acrylsäuremethylester in Gegenwart von 428 g einer 5 %igen Natriumperoxodisulfat-Lösung (1.5 mol-% bzgl. Acrylsäuremethylester) versetzt, bevor nochmals Propylen in Gegenwart von 214 g einer 5%igen Natriumperoxodisulfat-Lösung zugegeben wurde.
Die resultierende wässrige Lösung wurde mit ca. 5 g konzentrierter Schwefelsäure sauer gestellt und das Wasser im Vakuum abdestilliert. Der Rückstand wurde in Tetrahydrofuran aufgenommen und extrahiert. Die unlöslichen Salze

wurden abfiltriert und das Lösungsmittel des Filtrats im Vakuum abgetrennt. Es wurden 850 g (73 % der Theorie) 3-(Propylhydroxyphosphinyl)-Propionsäuremethylester als farbloses Öl erhalten; Chlorgehalt: < 0.1 ppm.

Beispiel 13

636 g (6 mol) Natriumhypophosphit-Monohydrat und 15 g konzentrierte Schwefelsäure wurden in 860 g Wasser gelöst in einem Druckreaktor (Glasautoklaven) vorgelegt. Bei Normaldruck wurden innerhalb von 1h bei 75-90°C aus verschiedenen Vorlagen 216 g (3 mol) Acrylsäure und 36.5 g einer 7 %igen Wasserstoffperoxid-Lösung (2.5 Mol-% bzgl. Acrylsäure) zugetropft. Anschließend wurden bei 80-105 °C über ein auf 3 bar eingestelltes Reduzierventil Ethylen bis zur Sättigung in den Reaktor eingeleitet. Über einen Zeitraum von 4 h wurde unter ständigem Rühren bei einem Ethylendruck von 2.5-2.9 bar und einer Temperatur von 80-105°C 73 g einer 7 %igen Wasserstoffperoxid-Lösung (2,5 mol-% bzgl. Ethylen) gleichmäßig zudosiert. Nach dem Entspannen wurden wiederum innerhalb von 1 h bei 75-90°C aus verschiedenen Vorlagen 216 g (3 mol) Acrylsäure und 36.5 g einer 7 %igen Wasserstoffperoxid-Lösung (2.5 Mol-% bzgl. Acrylsäure) zugetropft. Dann wurde das Wasser im Vakuum abdestilliert. Der Rückstand wurde in Tetrahydrofuran aufgenommen und extrahiert. Die unlöslichen Salze wurden abfiltriert. Das Lösungsmittel des Filtrats wurde im Vakuum abgetrennt und der Rückstand aus Aceton umkristallisiert. Es wurden 772 g (78 % der Theorie) 3-(Ethylhydroxyphosphinyl)-Propionsäure als farbloser Feststoff erhalten. 498 g (3.0 mol) der erhaltenen 3-(Ethylhydroxyphosphinyl)-Propionsäure wurden bei 80°C in 400 ml Toluol gelöst und mit 276 g (3.0 mol) Glycerin versetzt und in einer Destillationsapparatur mit Wasserabscheider bei 80-110°C während 6h verestert. Nach beendeter Veresterung wurde das Toluol im Vakuum abgetrennt. Es wurden 555 g (77 % der Theorie) 3-(Ethylhydroxyphosphinyl)-Propionsäure-(2,3-dihydroxypropyl)-ester als farbloses Öl erhalten; Chlorgehalt: < 0.1 ppm.

Beispiel 14

Ähnlich Beispiel 13 wurden 636 g (6 mol) Natriumhypophosphit-Monohydrat gelöst in 1181 g Wasser, zuerst mit 390 g (3 mol) Acrylsäurehydroxypropylester bei 95-100°C in Gegenwart von 142.8 g einer 5 %igen Natriumperoxodisulfat-Lösung (1.0 Mol-% bzgl. Acrylsäureester) versetzt. Das resultierende Reaktionsgemisch wurde anschließend in Gegenwart von 290.4 g einer 5 %igen Natriumperoxodisulfat-Lösung (1.0 Mol-% bzgl. Propylen) bei 135-140°C mit Propylen umgesetzt. Dann der Autoklav entspannt und bei 95-100°C wurden weitere 403 g (3.1 mol) Acrylsäurehydroxypropylester bei 95-100°C in Gegenwart von 147.6 g einer 5 %igen Natriumperoxodisulfat-Lösung (1.0 mol-% bzgl. Acrylsäureester) zudosiert. Nach entsprechender saurer Aufarbeitung wurden 867 g (65% der Theorie) 3-(Propylhydroxyphosphinyl)-Propionsäure-(2-hydroxypropyl)-ester als farbloses Öl erhalten; Chlorgehalt: < 0.1 ppm.

Beispiel 15

Ein Gemisch von 792 g einer 50 %igen wässrigen Lösung von hypophosphorigen Säure (6 mol) und 300 g Essigsäure wurden in einem Druckreaktor (Glasautoklaven) vorgelegt. Nach Aufheizen der Reaktionsmischung auf 115°C wurde über ein auf 3 bar eingestelltes Reduzierventil Ethylen bis zur Sättigung in den Reaktor eingeleitet. Über einen Zeitraum von 2 h wurde unter ständigem Rühren bei einem Ethylendruck von 2.5-2.9 bar und einer Temperatur von 120-140°C 49.3 g einer 5 %igen, essigsauren Azoisobutyronitril AIBN Lösung (0.5 Mol-% bzgl. Ethylen) gleichmäßig zudosiert. Nach Entspannen wurde bei Normaldruck innerhalb von 1 h bei 90-110°C aus verschiedenen Vorlagen 258.3 g (3 mol) Acrylsäuremethylester und 49.3 g einer 5 %igen, essigsauren AIBN-Lösung (0,5 Mol-% bzgl. Acrylsäuremethylester) zugetropft.

Abwechselnd wurden entsprechend folgende Mengen zudosiert:

in Gegenwart von Ethylen 29.6 g 5 %ige, essigsaure AIBN-Lösung, 155 g Acrylsäuremethylester und 29.6 g 5 %ige, essigsaure AIBN-Lösung,
in Gegenwart von Ethylen 19.7 g 5 %ige, essigsaure AIBN-Lösung, 103.3 g Acrylsäuremethylester und 19.7 g 5 %ige, essigsaure AIBN-Lösung,
in Gegenwart von Ethylen 29.6 g 5 %ige, essigsaure AIBN-Lösung.

Dann wurde das aus Wasser und Essigsäure bestehende Lösungsmittel im Vakuum abdestilliert. Es wurden 743 g (75 % der Theorie) 3-(Ethylhydroxyphosphinyl)-Propionsäuremethylester als farbloses Öl erhalten; Chlorgehalt: < 0.1 ppm.

Beispiel 16

Analog zu Beispiel 15 wurde ein Gemisch von 636 g Natriumhypophosphit-Monohydrat gelöst in 1181 g Wasser

in einem Druckreaktor (Glasautoklaven) vorgelegt und bei einem Ethylendruck von 2.5-2.9 bar und einer Temperatur von 120-140°C eine Lösung von 49.3 g einer 5 %igen, essigsauren Azoisobutyronitril AIBN Lösung (0.5 Mol-% bzgl. Ethylen) gleichmäßig zudosiert. Nach Entspannen wurde bei Normaldruck innerhalb von 1h bei 90-110°C aus verschiedenen Vorlagen 348.3 g (3 mol) Acrylsäurehydroxyethylester und 49.3 g einer 5 %igen, essigsauren AIBN-Lösung (0.5 Mol-% bzgl. Acrylsäurehydroxyethylester) zugetropft.

Abwechselnd wurden entsprechend folgende Mengen zudosiert:

in Gegenwart von Ethylen 29.6 g 5 %ige, essigsaure AIBN-Lösung, 208.0 g Acrylsäurehydroxyethylester und 29.6 g 5 %ige, essigsaure AIBN-Lösung,
in Gegenwart von Ethylen 19.7 g 5 %ige, essigsaure AIBN-Lösung, 139.3 g Acrylsäurehydroxyethylester und 19.7 g 5 %ige, essigsaure AIBN-Lösung,
in Gegenwart von Ethylen 29.6 g 5 %ige, essigsaure AIBN-Lösung.

Dann wurde das aus Wasser und Essigsäure bestehende Lösungsmittel im Vakuum abdestilliert. Es wurden 983 g (78 % der Theorie) 3-(Ethylhydroxyphosphinyl)-Propionsäure-(2-hydroxyethyl)-ester als farblose Öl erhalten; Chlorgehalt: < 0.1 ppm.

Beispiel 17

636 g (6 mol) Natriumhypophosphit-Monohydrat wurden in 860 g Wasser gelöst in einem Druckreaktor (Glasautoklaven) vorgelegt. Nach Aufheizen der Reaktionsmischung auf 100°C wurde über ein auf 3 bar eingestelltes Reduzierventil Ethylen bis zur Sättigung in den Reaktor eingeleitet. Über einen Zeitraum von 4 h wurde unter ständigem Rühren bei einem Ethylendruck von 2.5-2.9 bar und einer Temperatur von 100-130°C 428.4 g einer 5 %igen Natriumperoxodisulfat-Lösung (1.5 Mol-% bzgl. Ethylen) gleichmäßig zudosiert. Nach Entspannen wurde bei Normaldruck innerhalb von 1 h bei 90-100 °C aus verschiedenen Vorlagen 216 g (3 mol) Acrylsäure und 214.2 g einer 5 %igen Natriumperoxodisulfat-Lösung (1.5 Mol-% bzgl. Acrylsäure) zugetropft.

Die beiden Schritte wurden bei entsprechenden Temperaturen wiederholt, in dem wieder ein Ethylendruck von 2.5-2.9 bar eingestellt wurde und für 2 h nun 214.2 g einer 5 %igen Natriumperoxodisulfat-Lösung dosiert wurden. Danach wurde das Reaktionsgemisch wieder mit 216 g (3 mol) Acrylsäure in Gegenwart von 214.2 g einer 5 %igen Natriumperoxodisulfat-Lösung versetzt.

Dann wurde die wässrige Lösung mit ca. 5 g konzentrierter Schwefelsäure sauer gestellt und das Wasser im Vakuum abdestilliert. Der Rückstand wurde in Tetrahydrofuran aufgenommen und extrahiert. Die unlöslichen Salze wurden abfiltriert. Das Lösungsmittel des Filtrats wurde im Vakuum abgetrennt und der Rückstand aus Aceton umkristallisiert. Es wurden 752 g (76 % der Theorie) 3-(Ethylhydroxyphosphinyl)-Propionsäure als farbloser Feststoff erhalten. 664 g (4.0 mol) der erhaltenen 3-(Ethylhydroxyphosphinyl)-Propionsäure wurde bei 90°C in 400 ml Toluol gelöst und mit 248 g (4.0 mol) Ethylenglykol versetzt und in einer Destillationsapparatur mit Wasserabscheider bei 80-110°C während 5 h verestert. Nach beendeter Veresterung wurde das Toluol im Vakuum abgetrennt. Es wurden 714 g (85 % der Theorie) 3-(Ethylhydroxyphosphinyl)-Propionsäure-(2-hydroxyethyl)-ester als farbloses Öl erhalten; Chlorgehalt: < 0.1 ppm.

Beispiel 18

1. Ethylierung

636 g (6 mol) Natriumhypophosphit-Monohydrat wurden in 860 g Wasser gelöst in einem Druckreaktor (Glasautoklaven) vorgelegt. Nach Aufheizen der Reaktionsmischung auf 100°C wurde über ein auf 3 bar eingestelltes Reduzierventil Ethylen bis zur Sättigung in den Reaktor eingeleitet. Über einen Zeitraum von 4 h wurde unter ständigem Rühren bei einem Ethylendruck von 2.5-2.9 bar und einer Temperatur von 100-130°C eine Lösung von 428.4 g einer 5 %igen Natriumperoxodisulfat-Lösung (1.5 mol-% bzgl. Ethylen) gleichmäßig zudosiert.

2. Veresterung

Die wässrige Reaktionslösung wurde mit ca. 5 g konzentrierter Schwefelsäure sauer gestellt und das Wasser im Vakuum abdestilliert. Der Rückstand wurde in 700 g Butanol aufgenommen und extrahiert. Die unlöslichen Salze wurden abfiltriert. Das Filtrat wurde mit weiteren 1530 g Butanol versetzt und bei Normaldruck unter Wasserabscheiderbedingungen erhitzt. Nach beendeter Veresterung wurde das Butanol im Vakuum abgetrennt und der Rückstand im Vakuum über eine Vigreux-Kolonne destilliert. Es wurden 586 g (65 % der Theorie) Ethanphosphonigsäure-n-butylester als farblose Flüssigkeit erhalten.

3. Acrylsäure-Addition

In einem 1l Fünfhalskolben mit Thermometer, Rückflusskühler, Intensivrührer und Tropftrichter wurden 450 g (3 mol) nach oben stehenden Verfahren erhaltener Ethanphosphonigsäure-n-butylester und 385 g (3 mol) Acrylsäure-n-butylester vorgelegt. Unter Rühren wurden 15 ml Natriumbutylat (30 %) in einer solchen Geschwindigkeit dazugetropft, dass sich eine Reaktionstemperatur von max. 120°C einstellt. Anschließend wurde noch 20 min bei 80°C unter Rühren erhitzt. Das so erhaltene Rohprodukt wurde im Vakuum destilliert. Es wurden 751 g (90 % der Theorie) 3-(Ethyl-n-butoxy-phosphinyl)-Propionsäure-butyl-ester als farblose Flüssigkeit erhalten; Chlorgehalt: < 0.1 ppm.

Beispiel 19

Analog Beispiel 18 werden aus Natriumhypophosphit-Monohydrat 451 g (3 mol) Ethanphosphonigsäure-n-butylester hergestellt und mit 416 g (3,2 mol) Methacrylsäurehydroxyethylester umgesetzt. Es wurden 551 g (82 % der Theorie) 3-(Ethyl-n-butoxy-phosphinyl)-Isobuttersäure-2-hydroxyethylester als farblose Flüssigkeit erhalten; Chlorgehalt: < 0.1 ppm.

Beispiel 20

Analog Beispiel 18 wurden 556 g (2 mol) Carboxyethyl-ethylphosphinsäuredibutylester hergestellt und in einem 1 l Fünfhafskolben mit Thermometer, Rückflusskühler, Intensivrührer und Tropftrichter vorgelegt. Bei 160°C wurde während 4 h 500 ml Wasser eindosiert und eine Butanol-Wasser Mischung abdestilliert. Der feste Rückstand wurde aus Aceton umkristallisiert. Es wurden 305 g (92 % der Theorie) 3-(Ethylhydroxyphosphinyl)-Propionsäure als farbloser Feststoff erhalten.
498 g (3.0 mol) der erhaltenen 3-(Ethylhydroxyphosphinyl)-Propionsäure wurden bei 85°C in 400 ml Toluol gelöst und mit 335 g (5,4 mol) Ethylenglykol versetzt und in einer Destillationsapparatur mit Wasserabscheider bei 80-110°C während 2 verestert. Nach beendeter Veresterung wurde das Toluol und überschüssiges Ethylglykol im Vakuum abgetrennt. Es wurden 460 g (73% der Theorie) 3-(Ethylhydroxyphosphinyl)-Propionsäure-(2-hydroxyethyl)-ester als farbloses Öl erhalten; Chlorgehalt: < 0.1 ppm.

Beispiel 21

1. Ethylierung

636 g (6 mol) Natriumhypophosphit-Monohydrat wurden in 860 g Wasser gelöst in einem Druckreaktor (Glasautoklaven) vorgelegt. Nach Aufheizen der Reaktionsmischung auf 100°C wurde über ein auf 3 bar eingestelltes Reduzierventil Ethylen bis zur Sättigung in den Reaktor eingeleitet. Über einen Zeitraum von 4 h wurde unter ständigem Rühren bei einem Ethylendruck von 2.5-2.9 bar und einer Temperatur von 100-130°C eine Lösung von 428.4 g einer 5 %igen Natriumperoxodisulfat-Lösung (1.5 Mol-% bzgl. Ethylen) gleichmäßig zudosiert.

2. Veresterung

Die wässrige Reaktionslösung mit ca. 5g konzentrierter Schwefelsäure sauer gestellt und das Wasser im Vakuum abdestilliert. Der Rückstand wurde in 600 g Methanol aufgenommen und extrahiert. Die unlöslichen Salze wurden abfiltriert. Das Filtrat wurde mit 1800 g Chloroform versetzt und bei Normaldruck unter Rückfluss erhitzt. Nach beendeter Veresterung wurde die organische Phase abgetrennt. Das Methanol und $CHC1_3$ enthaltende Extraktionsmittel wird im Vakuum abdestilliert und der Rückstand im Vakuum über eine Vigreux-Kolonne destilliert. Es wurden 460 g (71 % der Theorie) Ethanphosphonigsäuremethylester als farblose Flüssigkeit erhalten.

3. Acrylsäure-Addition

In einem 11 Fünfhalskolben mit Thermometer, Rückflusskühler, Intensivrührer und Tropftrichter wurden 324 g (3 mol) nach oben stehenden Verfahren erhaltener Ethanphosphonigsäuremethylester und 216 g (3 mol) Acrylsäuremethylester vorgelegt. Unter Rühren wurden 15 ml Natriummethylat (30 %) in einer solchen Geschwindigkeit dazugetropft, dass sich eine Reaktionstemperatur von max. 60°C einstellt. Anschließend wurde noch 20 min bei 65°C unter Rühren erhitzt. Das so erhaltene Rohprodukt wurde im Vakuum destilliert. Es wurden 536 g (92 % der Theorie) 3-(Ethylmethoxy-phosphinyl)-Propionsäure-methyl-ester als farblose Flüssigkeit erhalten; Chlorgehalt: < 0.1 ppm.

Beispiel 22 (Korrosionstest mit Produkt aus Beispiel 1)

Es wurde ein Korrosionstest mit dem aus Beispiel 1 erhaltenen 3-(Ethylmethoxyphosphinyl)-Propionsäuremethylester (Chlorgehalt: 453 ppm) durchgeführt. Der Volleintauchtest ergab mit 1.4571-Stahl bei 225°C einen Abtrag durch Korrosion von 0.23 mm/a.

Beispiel 23 (Korrosionstest mit Produkt aus Beispiel 21)

Es wurde ein Korrosionstest mit dem aus Beispiel 21 erhaltene 3-(Ethyl-methoxy-phosphinyl)-Propionsäuremethyl-ester (Chlorgehalt: < 0.1 ppm) durchgeführt. Der Volleintauchtest ergab 1.4571 -Stahl bei 250°C einen Abtrag durch Korrosion von < 0.01 mm/a.
Diese Korrosionsrate ist erheblich vorteilhafter als in Beispiel 22. Der Korrosionstest liefert eine Aussage über die Verträglichkeit des Flammschutzmittels bei der Verarbeitung von Flammschutzmitteln, Flammgeschützten Polymerformmassen und/oder flammgeschützten Polymerformkörpern.

Beispiel 24 (Polyester-Formkörper und Brandtests)

Dimethylterephthalat, Ethylenglykol und 3-(Ethylhydroxyphosphinyl)-Propionsäure-(2-hydroxyethyl)-ester (aus Beispiel 8), im Gewichtsverhältnis 1000: 800: 90, wurden in Gegenwart von Zinkacetat und Antimon(III)oxid unter den üblichen Bedingungen polymerisiert. Aus der erhaltenen Schmelze (Phosphorgehalt: 0,7 %) wurden Probekörper der Dicke 1,6 mm für die Messung des Sauerstoffindexes (LOI) nach ISO 4589- 2 als auch für den Brandtest UL 94 (Underwriter Laboratories) gespritzt.
Die so hergestellten Probekörper ergaben einen LOI von 44 % $O_2$ und erfüllten nach UL 94 die Brandklasse V-0. Entsprechende Probekörper ohne 3-(Ethylhydroxyphosphinyl)-Propionsäure-(2-hydroxyethyl)-ester ergaben einen LOI von nur 31 %$O_2$ und erfüllten nach UL 94 nur die Brandklasse V-2. Der 3-(Ethylhydroxyphosphinyl)-Propionsäure enthaltende Polyester-Formkörper zeigt damit eindeutig flammschützende Eigenschaften.

**Patentansprüche**

1. Mischungen aus Mono-Carboxylfunktionalisierten Dialkylphosphinsäureestern und weiteren Komponenten, **dadurch gekennzeichnet, dass** sie

   A) **98-100 Gew.-%** 3-(Ethylhydroxyphosphinyl)-Propionsäuremethylester, 3-(Ethylhydroxyphosphinyl)-Propionsäure-(2-hydroxyethyl)-ester, 3-(Ethylhydroxyphosphinyl)-Propionsäure-(2,3-dihydroxypropyl)-ester, 3-(Ethylhydroxyphosphinyl)-2-methyl-Propionsäureallylester, 3-(Ethylhydroxyphosphinyl)-2-methyl-Propionsäure-(4-hydroxybutyl)-ester, 3-(Ethylhydroxyphosphinyl)-Propionsäure-(6-hydroxyhexyl)-ester, 3-(Ethyl-n-butoxy-phosphinyl)-Isobuttersäure-2-hydroxyethylester, 3-(Ethyl-n-butoxy-phosphinyl)-Propionsäure-butylester, 3-(Ethyl-methoxy-phosphinyl)-Propionsäure-methyl-ester, 3-(Propylhydroxyphosphinyl)-Propionsäurebutylester, 3-(Propylhydroxyphosphinyl)-Propionsäure-(2-hydroxyethyl)-ester, 3-(Propylhydroxyphosphinyl)-Propionsäure-(2-hydroxypropyl)-ester, 3-(Propylhydroxyphosphinyl)-2-methyl-Propionsäure-(2-hydroxypropyl)-ester, 3-(Propylhydroxyphosphinyl)-Propionsäuremethylester, 3-(Butylhydroxyphosphinyl)-Propionsäure-(2-hydroxyethyl)-ester, 3-(Hexylhydroxyphosphinyl)-Propionsäure-(3-hydroxypropyl)-ester, 3-(Ethylhydroxyphosphinyl)-2-methyl-Buttersäure-(2-hydroxyethyl)-ester, 3-(Propylhydroxyphosphinyl)-2-methyl-Buttersäure-(2-hydroxyethyl)-ester, 3-(Ethylhydroxyphosphinyl)-2-methyl-Buttersäure-(2-hydroxypropyl)-ester, 3-(Propylhydroxyphosphinyl)-2-methyl-Buttersäure-(2-hydroxypropyl)-ester, 3-(Propylhydroxyphosphinyl)-Propionsäure-(2,3-dihydroxypropyl)-ester und/oder 3-(Ethyl-methoxy-phosphinyl)-2-methyl-Buttersäure-methyl-ester und
   B) 0 bis 2 Gew.-% Halogene enthalten,

   wobei die Summe der Komponenten immer 100 Gew.-% beträgt.

2. Mischungen nach Anspruch 1, **dadurch gekennzeichnet, dass** sie 99,9995 bis 100 Gew.-% **der Verbindungen nach A)** und 0 bis 0,0005 Gew.-% Halogene enthalten.

3. Verfahren zur Herstellung aus Mono-Carboxylfunktionalisierten Dialkylphosphinsäureestern und weiteren Komponenten, **dadurch gekennzeichnet, dass** sie 0 bis 2 Gew.-% Halogene enthalten, wobei die Summe der Komponenten immer 100 Gew.-% beträgt, und **dadurch gekennzeichnet, dass** man hypophosphorige Säure oder deren

Salze (Komponente C) der Formel II

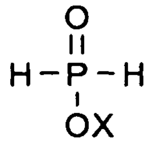

II

in der X H, Na, K oder $NH_4$ bedeutet, in Gegenwart eines radikalischen Initiators mit einem $\alpha,\beta$-ungesättigten Carbonsäure-Derivat (Komponente D) der Formel III,

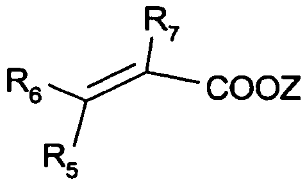

III

in der Z $C_{1-18}$-Alkyl oder $C_{6-18}$-Aryl bedeutet oder für Y steht oder einer $\alpha,\beta$-ungesättigten Carbonsäure (Komponente D') der Formel IV

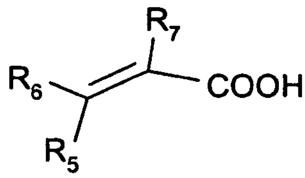

IV

und mit einem Olefin (Komponente E) der Formel V

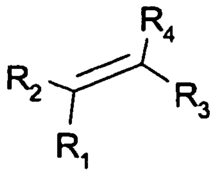

V

umsetzt, wobei in den Formeln III, IV und V $R_1$, $R_2$, $R_3$, $R_4$, $R_5$, $R_6$ und $R_7$ gleich oder verschieden sind und unabhängig voneinander H, Methyl, Ethyl, n-Propyl, Isopropyl, n-Butyl, Isobutyl, tert. Butyl und/oder Phenyl,
Y Methyl, Ethyl, n-Propyl, Isopropyl, n-Butyl, Isobutyl, tert. Butyl, Phenyl, 2-Hydroxyethyl, 2,3-Dihydroxypropyl, 2-Hydroxypropyl, 3-Hydroxypropyl, 4-Hydroxybutyl, 3-Hydroxybutyl, 2-Hydroxybutyl und/oder 6-Hydroxyhexyl, Allyl und/oder Glycerin,
X H, Li, Na, K oder $NH_4$ bedeutet,
oder X die gleiche Bedeutung wie Y hat, wobei dann X und Y für zwei gleiche oder für zwei verschiedene der obigen organischen Reste stehen und bei Einsatz von Formel IV ein Veresterungsschritt mit Y-OH folgt.

4. Verfahren nach Anspruch 3, **dadurch gekennzeichnet, dass** in einem Schritt 1 die Komponente C in Gegenwart eines radikalischen Initiators mit Komponente E zu einer Alkylphosphonigen Säure umgesetzt wird und in Schritt 2 die resultierende Reaktionslösung mit einem Alkohol M-OH verestert wird und dabei entstehende Phosphonigsäureester destillativ abgetrennt wird und dann in einem Schritt 3 in Gegenwart eines radikalischen oder eines basischen Initiators mit Komponente D zum Mono-Carboxylfunktionalisierten Dialkylphosphinsäureester umgesetzt wird.

5. Verfahren nach Anspruch 3 oder 4, **dadurch gekennzeichnet, dass** in einem Schritt 1 die Komponente C in Gegenwart eines radikalischen Initiators mit Komponente E zu einer alkylphosphonigen Säure umgesetzt wird und

in Schritt 2 die resultierende Reaktionslösung mit einem Alkohol M-OH verestert wird und dabei entstehende Phosphonigsäureester destillativ abgetrennt wird und dann in einem Schritt 3 in Gegenwart eines radikalischen oder eines basischen Initiators mit Komponente D' zum Mono-Carboxylfunktionalisierten Dialkylphosphinsäureester mit X = Alkyl, Y = H umgesetzt wird und anschließend in einem Schritt 4 dieser Dialkylphosphinsäureester mit einem Alkohol Y-OH an der Carboxyfunktion verestert wird, wobei ein Mono-Carboxylfunktionalisierter Dialkylphosphinsäureester A erhalten wird.

**6.** Verfahren nach Anspruch 5, **dadurch gekennzeichnet, dass** im Schritt 2 die alkylphosphonige Säure mit einem linearen oder verzweigten Alkohol der allgemeinen Formel M-OH, wobei M für einen linearen oder verzweigten Alkylrest mit 1 bis 10 Kohlenstoffatomen steht, direkt verestert wird.

**7.** Verfahren nach Anspruch 6, **dadurch gekennzeichnet, dass** es sich bei dem Alkohol M-OH um n-Butanol, Iso-Butanol oder Ethylhexanol handelt.

**8.** Verfahren nach einem oder mehreren der Ansprüche 3 bis 7, **dadurch gekennzeichnet, dass** es sich bei der Komponente C um das Ammonium- oder Natriumsalz der hypophosphorigen Säure handelt.

**9.** Verfahren nach einem oder mehreren der Ansprüche 3 bis 8, **dadurch gekennzeichnet, dass** es sich bei dem Initiator um Peroxide bildende Verbindungen und/oder Peroxoverbindungen wie Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azoverbindungen wie Azodiisobutyronitril, 2,2'-Azobis(2-amidinopropan)-dihydrochlorid und/oder 2,2-Azobis(N,N'-dimethylen-isobutyramidin)-dihydrochlorid handelt.

**10.** Verfahren nach einem oder mehreren der Ansprüche 3 bis 9, **dadurch gekennzeichnet, dass** es sich bei den $\alpha$, $\beta$-ungesättigten Carbonsäuren um Acrylsäure, Acrylsäuremethylester, Acrylsäureethylester, Methacrylsäure, Acrylsäurehydroxyethylester, Crotonsäure, Crotonsäureethylester, Tiglinsäure (trans 2,3-Dimethylacryl-säure) und/oder (trans-)2-Pentensäure handelt.

**11.** Verfahren nach einem oder mehreren der Ansprüche 3 bis 10, **dadurch gekennzeichnet, dass** es sich bei dem Olefin (Komponente E) um Ethylen, Propylen, n-Buten und/oder i-Buten oder beliebige Gemische davon, 1-Hexen, 1-Hepten und/oder 1-Octen; Allylalkohol, Allylamin, Allylbenzol, Allylanisol, Styrol, $\alpha$-Methylstyrol, 4-Methylstyrol und/oder Vinylacetat handelt.

**12.** Verfahren nach einem oder mehreren der Ansprüche 3 bis 11, **dadurch gekennzeichnet, dass** die Umsetzung der Komponente C mit den Komponenten D und/oder E bei einer Temperatur von 50 bis 150°C erfolgt.

**13.** Verfahren zur Herstellung von Mischungen nach Anspruch 1 oder 2, **dadurch gekennzeichnet, dass** man die Komponente C in einem Schritt 1 mit einem Keton zu 1-Hydroxy-1-dialkylphosphinat umsetzt, in einem Schritt 2 dieses 1-Hydroxy-1-dialkylphosphinat in Gegenwart eines radikalischen Initiators mit Komponente D umsetzt, dann in einem Schritt 3 das Keton abtrennt und in einem Schritt 4 das resultierende Reaktionsgemisch in Gegenwart eines radikalischen Initiators mit der Komponente E umsetzt.

**14.** Verfahren zur Herstellung von Mischungen nach Anspruch 1 oder 2, **dadurch gekennzeichnet, dass** man die Komponente C in einem Schritt 1 mit einem Keton zu 1-Hydroxy-1-dialkylphosphinat umsetzt, in einem Schritt 2 dieses 1-Hydroxy-1-dialkylphosphinat in Gegenwart eines radikalischen Initiators mit Komponente D' umsetzt, dann in einem Schritt 3 das Keton abtrennt und in einem Schritt 4 das resultierende Reaktionsgemisch in Gegenwart eines radikalischen Initiators mit der Komponente E umsetzt, und anschließend die hiernach erhaltene Mono-Carboxylfunktionalisierte Dialkylphosphinsäure (mit Y=H) mit einem Alkohol YOH zum Mono-Carboxylfunktionalisierten Dialkylphosphinsäureester umsetzt.

**15.** Verfahren zur Herstellung von Mischungen nach Anspruch 1 oder 2, **dadurch gekennzeichnet, dass** man die Komponente C in einem Schritt 1 mit Aceton zu 1-Hydroxy-1-methylethylphosphinat umsetzt, in einem Schritt 2 dieses 1-Hydroxy-1-methylethylphosphinat in Gegenwart eines radikalischen Initiators mit Komponente E umsetzt, dann in einem Schritt 3 das Aceton abtrennt und in einem Schritt 4 das resultierende Reaktionsgemisch in Gegenwart eines radikalischen Initiators mit der Komponente D oder D' umsetzt.

**16.** Verfahren nach Anspruch 15, **dadurch gekennzeichnet, dass** man nach der Umsetzung mit der Komponente D'

die hiernach erhaltene Mono-Carboxylfunktionalisierte Dialkylphosphinsäure (mit Y=H) mit einem Alkohol YOH zum Mono-Carboxylfunktionalisierten Dialkylphosphinsäureester umsetzt.

**17.** Verwendung von Mischungen nach Anspruch 1 oder 2 als Flammschutzmittel oder zur Herstellung von Flammschutzmitteln, flammgeschützten Formmassen und/oder flammgeschützten Polymer-Formkörpern, -Filmen, -Fäden und -Fasern.

**18.** Verwendung nach Anspruch 17, **dadurch gekennzeichnet, dass** die flammgeschützte Formmasse bzw. die Polymer-Formkörper, -Filme, -Fäden und -Fasern

1 bis 50 Gew.-% der Mischungen nach Anspruch 1 oder 2,
1 bis 99 Gew.-% Polymer oder Mischungen derselben, 0 bis 60 Gew.-% Additive und 0 bis 60 Gew.-% Füllstoff enthält, wobei die Summe der Komponenten immer 100 Gew.-% beträgt.

**Claims**

**1.** A mixture composed of monocarboxy-functionalized dialkylphosphinic esters and of further components, which comprises

A) from 98 to 100% by weight of methyl 3-(ethylhydroxyphosphinyl)propionate, 2-hydroxyethyl 3-(ethylhydroxyphosphinyl)propionate, 2,3-dihydroxypropyl 3-(ethylhydroxyphosphinyl)propionate, allyl 3-(ethylhydroxyphosphinyl)-2-methylpropionate, 4-hydroxybutyl 3-(ethylhydroxyphosphinyl)-2-methylpropionate, 6-hydroxyhexyl 3-(ethylhydroxyphosphinyl)propionate, 2-hydroxyethyl 3-(ethyl-n-butoxyphosphinyl)isobutyrate, butyl 3-(ethyl-n-butoxyphosphinyl)propionate, methyl 3-(ethylmethoxyphosphinyl)propionate, butyl 3-(propylhydroxyphosphinyl)propionate, 2-hydroxyethyl 3-(propylhydroxyphosphinyl)propionate, 2-hydroxypropyl 3-(propylhydroxyphosphinyl)propionate, 2-hydroxypropyl 3-(propylhydroxyphosphinyl)-2-methylpropionate, methyl 3-(propylhydroxyphosphinyl)propionate, 2-hydroxyethyl 3-(butylhydroxyphosphinyl)propionate, 3-hydroxypropyl 3-(hexylhydroxyphosphinyl)-propionate, 2-hydroxyethyl 3-(ethylhydroxyphosphinyl)-2-methylbutyrate, 2-hydroxyethyl 3-(propylhydroxyphosphinyl)-2-methylbutyrate, 2-hydroxypropyl 3-(ethylhydroxyphosphinyl)-2-methylbutyrate, 2-hydroxypropyl 3-(propylhydroxyphosphinyl)-2-methylbutyrate, 2,3-dihydroxypropyl 3-(propylhydroxyphosphinyl)propionate, and/or methyl 3-(ethylmethoxyphosphinyl)-2-methylbutyrate, and
B) from 0 to 2% by weight of halogens,

where the entirety of the components is always 100% by weight.

**2.** The mixture as claimed in claim 1, which comprises from 99.9995 to 100% by weight of the compounds A) and from 0 to 0.0005% by weight of halogens.

**3.** A process for preparation from monocarboxy-functionalized dialkylphosphinic esters and from further components, where they comprise from 0 to 2% by weight of halogens, and where the entirety of the components is always 100% by weight, and which comprises reacting hypophosphorous acid or its salts (component C) of the formula II

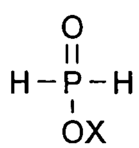

II

in which X is H, Na, K, or $NH_4$ in the presence of a free-radical initiator with an $\alpha,\beta$-unsaturated carboxylic acid derivative (component D) of the formula III,

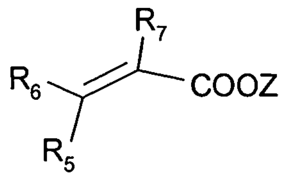

III

in which Z is $C_{1-18}$-alkyl or $C_{6-18}$-aryl or is Y, or with an α,β-unsaturated carboxylic acid (component D') of the formula IV

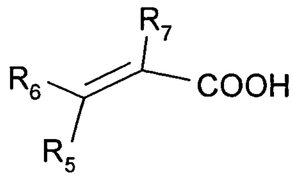

IV

and with an olefin (component E) of the formula V

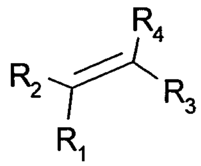

V

where in the formulae III, IV, and V $R_1$, $R_2$, $R_3$, $R_4$, $R_5$, $R_6$, and $R_7$ are identical or different and, independently of one another, are H, methyl, ethyl, n-propyl, isopropyl, n-butyl, isobutyl, tert-butyl, and/or phenyl,
Y is methyl, ethyl, n-propyl, isopropyl, n-butyl, isobutyl, tert-butyl, phenyl, 2-hydroxyethyl, 2,3-dihydroxypropyl, 2-hydroxypropyl, 3-hydroxypropyl, 4-hydroxybutyl; 3-hydroxybutyl, 2-hydroxybutyl, and/or 6-hydroxyhexyl, allyl, and/or glycerol,
X is H, Li, Na, K or $NH_4$,
or X is defined as for Y, and then X and Y are two identical radicals or two different radicals of the above organic radicals, and when formula IV is used an esterification step with Y-OH follows.

4. The process as claimed in claim 3, wherein, in a step 1, component C is reacted in the presence of a free-radical initiator with component E to give an alkylphosphorous acid and, in step 2, the resultant reaction solution is esterified with an alcohol M-OH, and phosphonous ester produced here is removed by distillation and then, in a step 3, is reacted in the presence of a free-radical initiator or of a basic initiator with component D to give the monocarboxy-functionalized dialkylphosphinic ester.

5. The process as claimed in one or more of claim 3 or 4, wherein, in a step 1, component C is reacted in the presence of a free-radical initiator with component E to give an alkylphosphonous acid and, in step 2, the resultant reaction solution is esterified with an alcohol M-OH and phosphonous ester produced here is removed by distillation and then, in a step 3, is reacted in the presence of a free-radical initiator or of a basic initiator with component D' to give the monocarboxy-functionalized dialkylphosphinic ester, where X = alkyl, Y = H, and then, in a step 4, this dialkylphosphinic ester is esterified with an alcohol Y-OH at the carboxy function, giving a monocarboxy-functionalized dialkylphosphinic ester A.

6. The process as claimed in claim 5, wherein, in step 2, the alkylphosphonous acid is directly esterified with a linear or branched alcohol of the formula M-OH, where M is a linear or branched alkyl radical having from 1 to 10 carbon atoms.

7. The process as claimed in claim 6, wherein the alcohol M-OH is n-butanol, isobutanol, or ethylhexanol.

8. The process as claimed in one or more of claims 3 to 7, wherein component C is the ammonium or sodium salt of

hypophosphorous acid.

**9.** The process as claimed in one or more of claims 3 to 8, wherein the initiator is peroxide-forming compounds and/or peroxo compounds, e.g. hydrogen peroxide, sodium peroxide, lithium peroxide, potassium persulfate, sodium persulfate, ammonium persulfate, sodium peroxodisulfate, potassium peroxoborate, peracetic acid, benzoyl peroxide, di-tert-butyl peroxide, and/or peroxodisulfuric acid, and/or is azo compounds, e.g. azodiisobutyronitrile, 2,2'-azobis (2-amidinopropane) dihydrochloride and/or 2,2'-azobis(N,N'-dimethyleneisobutyramidine) dihydrochloride.

**10.** The process as claimed in one or more of claims 3 to 9, wherein the $\alpha$,ß-unsaturated carboxylic acids are acrylic acid, methyl acrylate, ethyl acrylate, methacrylic acid, hydroxyethyl acrylate, crotonic acid, ethyl crotonate, tiglic acid (trans-2,3-dimethylacrylic acid), and/or (trans-)2-pentenoic acid.

**11.** The process as claimed in one or more of claims 3 to 10, wherein the olefin (component E) is ethylene, propylene, n-butene, and/or isobutene, or any desired mixture thereof, 1-hexene, 1-heptene, and/or 1-octene; allyl alcohol, allylamine, allylbenzene, allylanisole, styrene, $\alpha$-methylstyrene, 4-methylstyrene, and/or vinyl acetate.

**12.** The process as claimed in one or more of claims 3 to 11, wherein the reaction of component C with components D and/or E takes place at a temperature of from 50 to 150°C.

**13.** A process for preparation of mixtures as claimed in claim 1 or 2, which comprises reacting component C, in a step 1, with a ketone to give 1-hydroxy-1-dialkylphosphinate, reacting this 1-hydroxy-1-dialkylphosphinate, in a step 2, in the presence of a free-radical initiator with component D, then, in a step 3, removing the ketone, and reacting the resultant reaction mixture, in a step 4, in the presence of a free-radical initiator with component E.

**14.** A process for preparation of mixtures as claimed in claim 1 or 2, which comprises reacting component C, in a step 1, with a ketone to give 1-hydroxy-1-dialkylphosphinate, reacting this 1-hydroxy-1-dialkylphosphinate, in a step 2, in the presence of a free-radical initiator with component D', then, in a step 3, removing the ketone, and reacting the resultant reaction mixture, in a step 4, in the presence of a free-radical initiator with component E, and then reacting the monocarboxy-functionalized dialkylphosphinic acid thus obtained (where Y=H) with an alcohol YOH to give the monocarboxy-functionalized dialkylphosphinic ester.

**15.** A process for preparation of mixtures as claimed in claim 1 or 2, which comprises reacting component C, in a step 1, with aceteone to give 1-hydroxy-1-methylethylphosphinate, reacting this 1-hydroxy-1-methylethylphosphinate, in a step 2, in the presence of a free-radical initiator with component E, then, in a step 3, removing the acetone, and reacting the resultant reaction mixture, in a step 4, in the presence of a free-radical initiator with component D or D'.

**16.** The process as claimed in claim 15, wherein, after the reaction with component D', the monocarboxy-functionalized dialkylphosphinic acid thus obtained (where Y=H) is reacted with an alcohol YOH to give the monocarboxy-functionalized dialkylphosphinic ester.

**17.** The use of mixtures as claimed in claim 1 or 2 as flame retardants or for preparation of flame retardants, of flame-retardant molding compositions, and/or of flame-retardant polymer moldings, of flame-retardant polymer films, of flame-retardant polymer filaments, and of flame-retardant polymer fibers.

**18.** The use as claimed in claim 17, wherein the flame-retardant molding composition and, respectively, the polymer moldings, polymer films, polymer filaments, and polymer fibers comprise from 1 to 50% by weight of the mixtures as claimed in claim 1 or 2, from 1 to 99% by weight of polymer or a mixture of the same, from 0 to 60% by weight of additives, and from 0 to 60% by weight of filler, where the entirety of the components always amounts to 100% by weight.

## Revendications

**1.** Mélanges d'esters d'acides dialkylphosphiniques fonctionnalisés par monocarboxyle et d'autres composants, **caractérisés en ce qu'**ils contiennent

A) 98 à 100% en poids d'ester méthylique de l'acide 3-(éthylhydroxyphosphinyl)-propionique, d'ester 2-hydroxyéthylique de l'acide 3-(éthylhydroxyphosphinyl)-propionique, d'ester 2,3-dihydroxypropylique de l'acide

3-(éthylhydroxyphosphinyl)-propionique, d'ester allylique de l'acide 3-(éthylhydroxyphosphinyl)-2-méthylpropionique, d'ester 4-hydroxybutylique de l'acide 3-(éthylhydroxyphosphinyl)-2-méthylpropionique, d'ester 6-hydroxyéthylique de l'acide 3-(éthylhydroxyphosphinyl)-propionique, d'ester 2-hydroxyéthylique de l'acide 3-(éthyl-n-butoxyphosphinyl)-isobutyrique, d'ester butylique de l'acide 3-(éthyl-n-butoxyphosphinyl)-propionique, d'ester méthylique de l'acide 3-(éthylméthoxyphosphinyl)-propionique, d'ester butylique de l'acide 3-(propylhydroxyphosphinyl)-propionique, d'ester 2-hydroxyéthylique de l'acide 3-(propylhydroxyphosphinyl)-propionique, d'ester 2-hydroxypropylique de l'acide 3-(propylhydroxyphosphinyl)-propionique, d'ester 2-hydroxypropylique de l'acide 3-(propylhydroxyphosphinyl)-2-méthylpropionique, d'ester méthylique de l'acide 3-(propylhydroxyphosphinyl)-propionique, d'ester 2-hydroxyéthylique de l'acide 3-(butylhydroxyphosphinyl)-propionique, d'ester 3-hydroxypropylique de l'acide 3-(hexylhydroxyphosphinyl)-propionique, d'ester 2-hydroxyéthylique de l'acide 3-(éthylhydroxyphosphinyl)-2-méthylbutyrique, d'ester 2-hydroxyéthylique de l'acide 3-(propylhydroxyphosphinyl)-2-méthylbutyrique, d'ester 2-hydroxypropylique de l'acide 3-(éthylhydroxyphosphinyl)-2-méthylbutyrique, d'ester 2-hydroxypropylique de l'acide 3-(propylhydroxyphosphinyl)-2-méthylbutyrique, d'ester 2,3-dihydroxypropylique de l'acide 3-(propylhydroxyphosphinyl)-propionique et/ou d'ester méthylique de l'acide 3-(éthylméthoxyphosphinyl)-2-méthylbutyrique et
B) 0 à 2% en poids d'halogènes,

la somme des composants valant toujours 100% en poids.

**2.** Mélanges selon la revendication 1, **caractérisés en ce qu'**ils contiennent 99,9995 à 100% en poids des composés selon A) et 0 à 0,0005% en poids d'halogènes.

**3.** Procédé pour la préparation de mélanges d'esters d'acides dialkylphosphiniques fonctionnalisés par monocarboxyle et d'autres composants, **caractérisés en ce qu'**ils contiennent 0 à 2% en poids d'halogènes, la somme des composants valant toujours 100% en poids et **caractérisé en ce qu'**on transforme de l'acide hypophosphoreux ou ses sels (composant C) de formule II

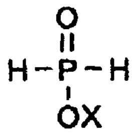

II

dans laquelle X signifie H, Na, K ou $NH_4$, en présence d'un initiateur de radicaux avec un dérivé d'acide carboxylique $\alpha$,ß-insaturé (composant D) de formule III,

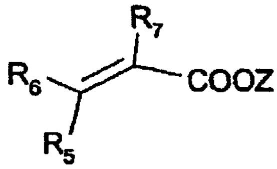

III

dans laquelle Z signifie $C_{1-18}$-alkyle ou $C_{6-18}$-aryle ou représente Y ou un acide carboxylique $\alpha,\beta$-insaturé (composant D') de formule IV

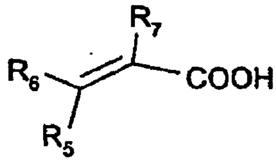

IV

et avec une oléfine (composant E) de formule V

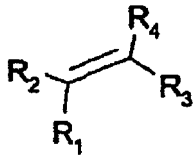

V

où, dans les formules III, IV et V

$R_1$, $R_2$, $R_3$, $R_4$, $R_5$, $R_6$ et $R_7$ sont identiques ou différents et signifient indépendamment l'un de l'autre, H, méthyle, éthyle, n-propyle, iso-propyle, n-butyle, isobutyle, tert-butyle, n-pentyle et/ou phényle,

Y représente méthyle, éthyle, n-propyle, isopropyle, n-butyle, isobutyle, tert-butyle, phényle, 2- hydroxyéthyle, 2,3-dihydroxypropyle, 2- hydroxypropyle, 3-hydroxypropyle, 4-hydroxybutyle, 3-hydroxybutyle, 2-hydroxybutyle et/ou 6- hydroxyhexyle, allyle et/ou glycérol,

X signifie H, Li, Na, K ou $NH_4$,

- ou X présente la même signification que Y, où X et Y représentent alors deux radicaux identiques ou différents des radicaux organiques ci-dessus et lors de l'utilisation de formule IV, une étape d'estérification avec Y-OH suit.

**4.** Procédé selon la revendication 3, **caractérisé en ce que** dans une étape 1, on transforme le composant C en présence d'un initiateur de radicaux avec le composant E en un acide alkylphosphoneux et dans l'étape 2, on estérifie la solution réactionnelle obtenue avec un alcool M-OH et on sépare l'ester de l'acide phosphoneux qui se forme par distillation, puis, dans une étape 3, on transforme, en présence d'un initiateur de radicaux ou basique avec le composant D en ester d'acide dialkylphosphinique fonctionnalisé par monocarboxyle.

**5.** Procédé selon la revendication 3 ou 4, **caractérisé en ce que**, dans une étape 1, on transforme le composant C en présence d'un initiateur de radicaux avec le composant E en un acide alkylphosphoneux et dans l'étape 2, on estérifie la solution réactionnelle obtenue avec un alcool M-OH et on sépare l'ester de l'acide phosphoneux qui se forme par distillation, puis, dans une étape 3, on transforme, en présence d'un initiateur de radicaux ou basique avec le composant D' en ester d'acide dialkylphosphinique fonctionnalisé par monocarboxyle avec X = alkyle, Y = H puis, dans une étape 4, on estérifie cet ester d'acide dialkylphosphinique avec un alcool Y-OH sur la fonction carboxy, avec obtention d'un ester d'acide dialkylphosphinique fonctionnalisé par monocarboxyle A.

**6.** Procédé selon la revendication 5, **caractérisé en ce que**, dans l'étape 2, on estérifie directement l'acide alkylphosphoneux avec un alcool linéaire ou ramifié de formule générale M-OH, où M représente un radical alkyle linéaire ou ramifié comprenant 1 à 10 atomes de carbone.

**7.** Procédé selon la revendication 6, **caractérisé en ce qu'**il s'agit, pour l'alcool M-OH, de n-butanol, d'iso-butanol ou d'éthylhexanol.

**8.** Procédé selon l'une ou plusieurs des revendications 3 à 7, **caractérisé en ce qu'**il s'agit, pour le composant C, du sel d'ammonium ou de sodium de l'acide hypophosphoreux.

**9.** Procédé selon l'une ou plusieurs des revendications 3 à 8, **caractérisé en ce qu'**il s'agit, pour l'initiateur, de composés formant des peroxydes et/ou de composés peroxo, tels que le peroxyde d'hydrogène, le peroxyde de sodium, le peroxyde de lithium, le persulfate de potassium, le persulfate de sodium, le persulfate d'ammonium, le peroxodisulfate de sodium, le peroxoborate de potassium, l'acide peracétique, le peroxyde de benzoyle, le peroxyde de di-t-butyle et/ou l'acide peroxodisulfurique et/ou de composés azo, tels que l'azodiisobutyronitrile, le dichlorhydrate de 2,2'-azobis(2-amidinopropane)et/ou le dichlorhydrate de 2,2'-azobis(N,N'-diméthylèneisobutyramidine).

**10.** Procédé selon l'une ou plusieurs des revendications 3 à 9, **caractérisé en ce qu'**il s'agit, pour les acides carboxyliques $\alpha,\beta$-insaturés, d'acide acrylique, d'ester méthylique de l'acide acrylique, d'ester éthylique de l'acide acrylique, d'acide méthacrylique, d'ester hydroxyéthylique de l'acide acrylique, d'acide crotonique, d'ester éthylique de l'acide crotonique, d'acide tiglinique (acide trans-2,3-diméthylacrylique) et/ou d'acide (trans)-2-penténoïque.

**11.** Procédé selon l'une ou plusieurs des revendications 3 à 10, **caractérisé en ce qu'**il s'agit, pour l'oléfine (composant E) d'éthylène, de propylène, de n-butène et/ou d'i-butène ou de mélanges quelconques de ceux-ci, de 1-hexène, de 1-heptène et/ou de 1-octène ; d'alcool allylique, d'allylamine, d'allylbenzène, d'allylanisole, de styrène, d'$\alpha$-

méthylstyrène, de 4-méthylstyrène et/ou d'acétate de vinyle.

**12.** Procédé selon l'une ou plusieurs des revendications 3 à 11, **caractérisé en ce que** la transformation du composant C avec les composants D et/ou E est réalisée à une température de 50 à 150°C.

**13.** Procédé pour la préparation de mélanges selon la revendication 1 ou 2, **caractérisé en ce qu'**on transforme le composant C dans une étape 1 avec une cétone en 1-hydroxy-1-dialkylphosphinate, dans une étape 2, on transforme ce 1-hydroxy-1-dialkylphosphinate en présence d'un initiateur de radicaux avec le composant D, puis on sépare la cétone dans une étape 3 et dans une étape 4, on transforme le mélange réactionnel obtenu en présence d'un initiateur de radicaux avec le composant E.

**14.** Procédé pour la préparation de mélanges selon la revendication 1 ou 2, **caractérisé en ce qu'**on transforme le composant C dans une étape 1 avec une cétone en 1-hydroxy-1-dialkylphosphinate, dans une étape 2, on transforme ce 1-hydroxy-1-dialkylphosphinate en présence d'un initiateur de radicaux avec le composant D', puis on sépare la cétone dans une étape 3 et dans une étape 4, on transforme le mélange réactionnel obtenu en présence d'un initiateur de radicaux avec le composant E, puis on transforme l'acide dialkylphosphinique fonctionnalisé par monocarboxyle ainsi obtenu (avec Y = H) avec un alcool YOH en ester d'acide dialkylphosphinique fonctionnalisé par monocarboxyle.

**15.** Procédé pour la préparation de mélanges selon la revendication 1 ou 2, **caractérisé en ce qu'**on transforme le composant C dans une étape 1 avec de l'acétone en 1-hydroxy-1-méthyléthylphosphinate, dans une étape 2, on transforme ce 1-hydroxy-1-méthyléthylphosphinate en présence d'un initiateur de radicaux avec le composant E, puis on sépare l'acétone dans une étape 3 et dans une étape 4, on transforme le mélange réactionnel obtenu en présence d'un initiateur de radicaux avec le composant D ou D'.

**16.** Procédé selon la revendication 15, **caractérisé en ce qu'**après la transformation avec le composant D', on transforme l'acide dialkylphosphinique fonctionnalisé par monocarboxyle (avec Y=H) ainsi obtenu avec un alcool YOH en ester d'acide dialkylphosphinique fonctionnalisé par monocarboxyle.

**17.** Utilisation de mélanges selon la revendication 1 ou 2 comme agent ignifuge ou pour la préparation d'agents ignifuges, de masses de moulage ignifugées et/ou de corps façonnés, de films, de fils et de fibres en polymère, ignifugés.

**18.** Utilisation selon la revendication 17, **caractérisée en ce que** la masse de moulage ignifugée ou les corps façonnés, films, fils et fibres en polymère ignifugés contiennent

- 1 à 50% en poids des mélanges selon la revendication 1 ou 2,
- 1 à 99% en poids de polymère ou de mélanges de ceux-ci, 0 à 60% en poids d'additifs et 0 à 60% en poids de charge, la somme des composants valant toujours 100% en poids.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10153780 A


### In der Beschreibung aufgeführte Nicht-Patentliteratur


- **V.K. KHAIRULLIN ; R. R. SHAGIDULLIN.** *Zh. Obshch. Khim.,* vol. 36, 289-296
- Houben-Weyl. vol. 12/1, 258-259
- Houben-Weyl. vol. 12/1, 306
- **KURDYUMOVA, N. R. ; ROZHKO, L. F. ; RAGULIN, V. V. ; TSVETKOV, E. N.** *Russian Journal of General Chemistry,* 1997, vol. 67 (12), 1852-1856
- **V.K. CHAJRULLIN ; R. R. SHAGIDULLIN.** *Z. Obschei. Khim.,* 1966, vol. 36, 289-296